# EUROPÄISCHE PATENTSCHRIFT

(11) **EP 4 419 320 B1**
(45) Veröffentlichungstag und Bekanntmachung des Hinweises auf die Patenterteilung: **10.12.2025**
(21) Anmeldenummer: 22761401.3
(22) Anmeldetag: 18.08.2022
(51) Int. Cl.: B29D 30/00, B23K 26/352, B29C 65/00

(54) **VERFAHREN ZUR VERBINDUNG VON REIFENKOMPONENTEN**
METHOD FOR CONNECTING TYRE COMPONENTS
PROCÉDÉ DE LIAISON DE COMPOSANTS DE PNEUMATIQUE

(30) Priorität: 21.10.2021 DE 102021211889
(43) Veröffentlichungstag der Anmeldung: 28.08.2024
(73) Patentinhaber: Continental Reifen Deutschland GmbH, 30175 Hannover (DE)
(72) Erfinder: KOMISCHKE, Ralf, 30175 Hannover (DE)
(74) Vertreter: Continental Corporation
(86) Internationale Anmeldenummer: PCT/DE2022/200191
(87) Internationale Veröffentlichungsnummer: WO 2023/066432

(56) Entgegenhaltungen:
- EP-A1- 2 230 072
- EP-A1- 3 312 236
- EP-A1- 3 835 044
- WO-A1-2019/105623
- DE-A1- 102018 101 685
- US-A- 5 944 925
- US-A1- 2016 001 619
- US-A1- 2019 248 084

## Beschreibung

Die Erfindung betrifft ein Verfahren zur Verbindung von Reifenkomponenten für den Einsatz in der Reifenfertigung und ein darauf aufbauendes Verfahren zum Herstellen eines Fahrzeugreifens, sowie eine hierfür geeignete Vorrichtung und ein diese Vorrichtung umfassendes System.

Bei der Herstellung moderner Fahrzeugreifen werden zumeist eine Vielzahl verschiedener Reifenkomponenten miteinander verbunden. Hierfür werden die einzelnen Reifenkomponenten in einer möglichst kontinuierlichen Produktionsabfolge, beispielsweise unter Einsatz diverser Wickelprozesse, zu einem Gesamtbauteil, einem sogenannten Fahrzeugreifenrohling, verbunden. Dieser Fahrzeugreifenrohling wird anschließend einer Vulkanisationseinrichtung zugeführt, in der das finale Verbinden der verschiedenen Reifenkomponenten, zumeist durch Warmvulkanisation, erfolgt, sodass die vulkanisierbaren Kautschukmischungen im Fahrzeugreifenrohling in belastbare Gummiwerkstoffe überführt und die verschiedenen vulkanisierbaren Kautschukmischungen der unterschiedlichen Reifenkomponenten stoffschlüssig miteinander verbunden werden.

Darüber hinaus können dem Fahrzeugreifen vor und/oder nach der Vulkanisation des Fahrzeugreifenrohlings auch zusätzliche Reifenkomponenten hinzugefügt werden, die nicht lediglich der Gewährleistung der Grundfunktion des Fahrzeugreifens dienen, sondern zusätzliche Funktionalitäten schaffen, beispielsweise in der Form von zusätzlichen Schutzschichten, separaten Kennzeichnungen oder elektronischen Sendern, wie beispielsweise RFID-Chips, oder Sensoren, wie es beispielsweise in der EP 3281810 A1 oder der EP3835044 A1 offenbart wird. Die Verbindung solcher Komponenten mit einem bereits vulkanisierten Fahrzeugreifen kann dabei auf viele verschiedene Arten erfolgen, beispielsweise durch Warmvulkanisation, Kaltvulkanisation oder Verklebung.

Unabhängig davon, ob es um eine Verbindung von zwei Reifenkomponenten eines Fahrzeugreifenrohlings oder um die nachträgliche Applikation weiterer Reifenkomponenten, wie beispielsweise Sensoren, geht, kommt der Verbundfestigkeit der dabei erzeugten Verbindung eine wesentliche Bedeutung zu. Bedingt durch die großen Belastungen, die moderne Fahrzeugreifen im Einsatz erfahren, ist es essentiell, dass die Verbindung zwischen zwei Reifenkomponenten belastbar und auch bei widrigen Bedingungen über lange Zeiten beständig ist.

Zum Erreichen einer hinreichend guten Verbindung der Reifenkomponenten, bspw. den Grundbauteilen eines Fahrzeugreifens oder später applizierter Komponenten, kommt der Oberflächenbeschaffenheit der Reifenkomponenten an den Verbindungsflächen eine zentrale Bedeutung zu. Die Belegung der Verbindungsflächen mit Verunreinigungen, wie sie beispielsweise bei Produktionsunterbrechungen oder längeren Lagerzeiten an der Umgebungsluft auftreten können, können die Verbundfestigkeit der späteren Verbindung ebenso negativ beeinflussen, wie beispielsweise auch kondensierte Feuchtigkeit, die sich bei in der Reifenindustrie üblichen Fertigungsbedingungen aus der Umgebungsluft auf der Oberfläche der Reifenkomponenten ablagern kann. Solche Fremdkörper können die Verbundfestigkeit der Verbindung zwischen zwei Reifenkomponenten nachteilig beeinflussen. Ebenso ist es möglich, dass sich an der Oberfläche von Reifenkomponenten, beispielsweise nach langer Lagerung, durch Diffusionseffekte, die chemische Zusammensetzung und damit die Stoffeigenschaften der vulkanisierbaren Kautschukmischung bzw. des Gummiwerkstoffs verändern, wodurch die erreichbare Verbundfestigkeit ebenfalls nachteilig beeinflusst werden kann. Zudem können auch makroskopische Vorsprünge auf der Oberfläche die erreichbare Verbundfestigkeit negativ beeinflussen, wenn diese lokal ein enges Aneinanderfügen der Reifenkomponenten verhindern und dadurch zu Fehlstellen führen, in denen lokal keine Verbindung zwischen den Verbindungsflächen erreicht wird.

Die vorstehenden Probleme treten dabei nicht nur bei der unmittelbaren Verbindung von zwei Komponenten auf, sondern auch beim Einsatz von Adhäsivstoffen oder anderen Verbindungshilfsmitteln. Auch beim Einsatz dieser Stoffe kann eine Oberflächenbelegung der Reifenkomponenten mit Verunreinigungen bzw. eine suboptimale Oberflächenstruktur die Verbundfestigkeit der damit herstellbaren Komponentenverbunde negativ beeinflussen.

Zur Lösung der vorstehenden Problematik sind im Stand der Technik Verfahren zur Beeinflussung der Oberflächenbeschaffenheit und Oberflächenstruktur bekannt, die zumeist auf eine Kombination von mechanischen und chemischen Verfahren setzen. Die aus dem Stand der Technik bekannten Verfahren werden jedoch in vielen Fällen als nachteilig empfunden, insbesondere hinsichtlich der Präzision und der Kontrollierbarkeit, mit der die Beeinflussung der Oberflächenbeschaffenheit erfolgen kann. Zudem wird bei den aus dem Stand der Technik bekannten Verfahren die Reinigungsleistung sowie die Strukturierungsleistung häufig als unzureichend empfunden, insbesondere auf vulkanisierbaren Kautschukmischungen und Gummiwerkstoffen, wie sie in der Reifenindustrie zum Einsatz kommen.

Stand der Technik ist beispielsweise in der EP 3 835 044 A1 zu finden, welche ein Verfahren und eine Fügeanlage zum Befestigen eines Aufnahmekörpers für ein elektronisches Gerät an einer innenliegenden Gummischicht eines vulkanisierten Reifens betrifft. Die EP 2 230 072 A1 betrifft ein Verfahren und ein System zur Runderneuerung von Reifen. Die EP 3 312 236 A1 betrifft einen Reifen mit reduziertem Hohlraumrauschen und ein Verfahren zur Herstellung des entsprechenden Reifens. Weiterer Stand der Technik ist in der US 2016/001619 A1, der US 5 944 925 A, der DE 10 2018 101685 A1, der US 2019/248084 A1 und der WO 2019/105623 A1 zu finden.

Es war daher die primäre Aufgabe der vorliegenden Erfindung, die Nachteile des Standes der Technik auszuräumen oder zumindest zu verringern.

Insbesondere war es die Aufgabe der vorliegenden Erfindung, ein Verfahren zur Verbindung von Reifenkomponenten anzugeben, welches in der Reifenfertigung eingesetzt werden kann und mit welchem es möglich ist, einen Komponentenverbund aus zwei Reifenkomponenten zu erhalten, welcher über eine ausgezeichnete Verbundfestigkeit verfügt und/oder mittels Vulkanisation in ein Gummiprodukt überführt werden kann, welches eine ausgezeichnete Verbundfestigkeit zwischen den unterschiedlichen Reifenkomponenten aufweist.

Insoweit war es eine Aufgabe der vorliegenden Erfindung, dass das anzugebende Verfahren möglichst zeit- und kosteneffizient ausführbar sein sollte und ein hohes Maß an Reproduzierbarkeit ermöglichen sollte.

Darüber hinaus war es wünschenswert, dass das anzugebende Verfahren zur Verbindung von Reifenkomponenten eine kontinuierliche Verfahrensführung ermöglichen sollte.

Zudem war eine Aufgabe der vorliegenden Erfindung, dass das anzugebende Verfahren eine hohe Flexibilität hinsichtlich der in den Reifenkomponenten eingesetzten Materialien aufweisen sollte und auch für eine breite Palette an Reifenkomponenten einsetzbar sein sollte, insbesondere für Grundkomponenten von Fahrzeugreifenrohlingen, beispielsweise Laufstreifen sowie für nachträglich applizierte Reifenkomponenten, beispielsweise elektronische Sensoren, welche in Kautschukmischungen eingebettet sind.

Es war eine ergänzende Aufgabe der vorliegenden Erfindung, eine Vorrichtung zur Vorbereitung von Reifenkomponenten anzugeben, die für den Einsatz in dem anzugebenden Verfahren geeignet ist. Ebenso war es eine Aufgabe der vorliegenden Erfindung, ein System zur Vorbereitung von Reifenkomponenten anzugeben, welches im anzugebenden Verfahren eingesetzt werden kann.

Der Erfinder der vorliegenden Erfindung hat nunmehr erkannt, dass die vorstehend beschriebenen Aufgaben gelöst werden können, wenn die für die Verbindung vorgesehenen Oberflächen von Reifenkomponenten in kontrollierter Weise in ihrer Oberflächenbeschaffenheit so beeinflusst werden, dass ein optimaler Zustand für die weitere Verbindung zur Verfügung gestellt wird. Überraschenderweise lassen sich ausgezeichnete Verbundfestigkeiten erhalten, wenn vor dem Verbinden der zwei Reifenkomponenten eine Reinigung der Oberfläche in einem Bereich erfolgt, welcher zuvor mit einer präzise vordefinierten Oberflächenstruktur versehen wurde, wie es in den Ansprüchen definiert ist. Darüber hinaus ist es dem Erfinder gelungen, besonders günstige Oberflächenstrukturen und bei den zu verbindenden Reifenkomponenten zu identifizieren, mit denen sich besonders gute Ergebnisse in der Verbundfestigkeit erzielen lassen oder die in einer besonders effizienten Prozessführung appliziert werden können.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Vorrichtungen und Systeme ergeben sich aus den Merkmalen bevorzugter Verfahren.

Die Erfindung betrifft ein Verfahren zur Verbindung von Reifenkomponenten für den Einsatz in der Reifenfertigung, umfassend die folgenden Verfahrensschritte:
a) Herstellen oder Bereitstellen einer ersten Reifenkomponente, umfassend eine unvulkanisierte oder zumindest teilweise vulkanisierte erste Kautschukmischung,
b) Herstellen oder Bereitstellen einer zweiten Reifenkomponente, umfassend eine unvulkanisierte oder zumindest teilweise vulkanisierte zweite Kautschukmischung,
c1) Bearbeiten zumindest einer Oberfläche der ersten Reifenkomponente mit einem Bearbeitungslaser in einem materialabtragenden Verfahren zum Erzeugen einer vordefinierten ersten Oberflächenstruktur auf der bearbeiteten Oberfläche der ersten Reifenkomponente,
c2) Reinigen der bearbeiteten Oberfläche der ersten Reifenkomponente im Bereich der ersten Oberflächenstruktur mit einer Reinigungsvorrichtung zum Erhalt einer gereinigten bearbeiteten Oberfläche der ersten Reifenkomponente, und
d) Verbinden der ersten Reifenkomponente mit der zweiten Reifenkomponente an der gereinigten bearbeiteten Oberfläche der ersten Reifenkomponente im Bereich der ersten Oberflächenstruktur zum Erhalt eines Komponentenverbundes,
wobei die erste Reifenkomponente und/oder die zweite Reifenkomponente ausgewählt ist aus der Gruppe bestehend aus in einer unvulkanisierten oder zumindest teilweise vulkanisierten Kautschukmischung eingebetteten elektronischen Bauteilen, oder ausgewählt ist aus der Gruppe bestehend aus Aufnahmekörpern für elektronische Bauteile,
dadurch gekennzeichnet, dass das Verfahren zusätzlich den Verfahrensschritt:
   c3) Bearbeiten zumindest einer Oberfläche der zweiten Reifenkomponente mit einem Bearbeitungslaser in einem materialabtragenden Verfahren zum Erzeugen einer vordefinierten zweiten Oberflächenstruktur auf der bearbeiteten Oberfläche der zweiten Reifenkomponente,
   umfasst,
   wobei das Verbinden der ersten Reifenkomponente mit der zweiten Reifenkomponente an der bearbeiteten Oberfläche der zweiten Reifenkomponente im Bereich der zweiten Oberflächenstruktur erfolgt,
   wobei die vordefinierte erste Oberflächenstruktur und die vordefinierte zweite Oberflächenstruktur identisch oder komplementär zueinander sind,
   wobei die erste Oberflächenstruktur und/oder die zweite Oberflächenstruktur eine Vielzahl von Vertiefungen umfasst, wobei die Vertiefungen eine mittlere Tiefe im Bereich von 10 bis 200 µm aufweisen.

Die in dem erfindungsgemäßen Verfahren zu verbindenden Reifenkomponenten werden in den Verfahrensschritten a) und b) hergestellt oder bereitgestellt. Das Bereitstellen kann beispielsweise durch das Einkaufen von einem Zulieferer erfolgen, wohingegen das Herstellen unter Verwendung von in der Reifenindustrie üblichen Prozessen erfolgen kann.

Die erste und zweite Reifenkomponente umfassen jeweils eine Kautschukmischung. Diese kann unvulkanisiert sein, sodass die erste und/oder zweite Reifenkomponente sogenannte grüne Reifenkomponenten sind. Darüber hinaus können die erste und/oder zweite Reifenkomponente auch zumindest teilweise oder vollständig vulkanisiert sein, wie es beispielsweise bei Fahrzeugreifen der Fall ist. In Übereinstimmung mit dem fachmännischen Verständnis sind als Reifenkomponenten unter anderem solche geeignet, die die entsprechende Kautschukmischung zumindest umfassen, beispielsweise, weil neben der Kautschukmischung auch Festigkeitsträger vorgesehen sind, wie es beispielsweise bei Reifenkarkassen regelmäßig der Fall ist, oder weil in der Kautschukmischung zusätzlich elektronische Bauteile verarbeitet sind, beispielsweise RFID-Chips oder Sensoren.

Bevorzugt ist insoweit ein erfindungsgemäßes Verfahren, wobei die erste Kautschukmischung zumindest teilweise vulkanisiert, bevorzugt im Wesentlichen vollständig vulkanisiert, ist, und/oder wobei die erste Reifenkomponente aus der unvulkanisierten oder zumindest teilweise vulkanisierten ersten Kautschukmischung besteht. Bevorzugt ist auch ein erfindungsgemäßes Verfahren, wobei die zweite Kautschukmischung zumindest teilweise vulkanisiert, bevorzugt im Wesentlichen vollständig vulkanisiert, ist, und/oder wobei die zweite Reifenkomponente aus der unvulkanisierten oder zumindest teilweise vulkanisierten zweiten Kautschukmischung besteht. Besonders bevorzugt sind die erste Kautschukmischung und die zweite Kautschukmischung im Wesentlichen vollständig vulkanisiert.

Bevorzugt ist insoweit ein erfindungsgemäßes Verfahren, wobei die erste Kautschukmischung und/oder die zweite Kautschukmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Bevorzugt ist zudem ein erfindungsgemäßes Verfahren, wobei die erste Kautschukmischung und/oder die zweite Kautschukmischung 2,5 bis 8,0 phr Schwefel umfasst, und/oder, wobei die erste Kautschukmischung und/oder die zweite Kautschukmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, amorphem Siliciumdioxid und Schichtsilikaten, besonders bevorzugt ausgewählt sind aus der Gruppe bestehend aus Ruß und amorphem Siliciumdioxid.

Bevorzugt ist dabei insbesondere ein erfindungsgemäßes Verfahren, wobei die erste Kautschukmischung und/oder die zweite Kautschukmischung zumindest einen Dienkautschuk und zumindest einen Füllstoff umfasst.

Die im Rahmen der vorliegenden Erfindung verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen, die sich entsprechend zu 100 addiert.

In dem erfindungsgemäßen Verfahren wird zumindest eine der Reifenkomponenten, nämlich die erste Reifenkomponente, für das spätere Verbinden vorbereitet. Dies erfolgt dadurch, dass zumindest eine Oberfläche der ersten Reifenkomponente an der die zweite Reifenkomponente später angebracht werden soll, zunächst mit einem materialabtragenden Verfahren bearbeitet wird. Dieses materialabtragende Verfahren verwendet dabei erfindungsgemäß einen Bearbeitungslaser, welcher vorteilhafterweise eine hohe Präzision und gute Steuerbarkeit des Materialabtrags erlaubt. Hierbei wird nicht eine beliebige, zufällige Struktur auf der Oberfläche erzeugt, sondern es wird eine vordefinierte Oberflächenstruktur, d. h. eine zuvor festgelegte und dadurch vorgegebene Oberflächenstruktur, erzeugt, sodass die Oberflächenbeschaffenheit der ersten Reifenkomponente den vordefinierten Vorgaben entspricht.

Zur Realisierung der vorteilhaften Eigenschaften des erfindungsgemäßen Verfahrens wird der Bearbeitungsschritt mit einem Reinigungsschritt kombiniert, bei dem die bearbeitete Oberfläche in dem Bereich, welcher mit einem Bearbeitungslaser materialabtragend bearbeitet wurde, gereinigt wird. Dies erfolgt mithilfe einer Reinigungsvorrichtung und resultiert in einer gereinigten bearbeiteten Oberfläche der ersten Reifenkomponente, welche optimal für eine Verbindung mit der zweiten Reifenkomponente präpariert ist. Entsprechend wird in Verfahrensschritt d) die erste Reifenkomponente mit der zweiten Reifenkomponente verbunden, wobei dies in genau dem Bereich der Oberfläche der ersten Reifenkomponente erfolgt, in dem die gereinigte bearbeitete Oberfläche vorliegt.

Da die Oberfläche durch die Bearbeitung auch in solchen Bereichen eine Verschmutzung erfahren kann, die selbst nicht bearbeitet wurden, sondern lediglich an bearbeitete Bereiche angrenzen, ist es effizient und vorteilhaft, wenn mit der Reinigungsvorrichtung auch die angrenzenden Bereiche der bearbeiteten Oberfläche gereinigt werden. Bevorzugt ist deshalb ein erfindungsgemäßes Verfahren, wobei in Schritt c2) das Reinigen von nicht bearbeiteten Bereichen der Oberflächen der ersten Reifenkomponente erfolgt, wobei die nicht bearbeiteten Bereiche der Oberfläche bevorzugt an die bearbeitete Oberfläche angrenzen.

Beispielsweise kann als erste Reifenkomponente ein Sensor bereitgestellt werden, welcher in einer zumindest teilweise vulkanisierten Kautschukmischung eingebettet ist und über eine Kontaktfläche verfügt, mit der er an einem vulkanisierten Fahrzeugreifen befestigt werden soll. Die entsprechende Kontaktfläche kann beispielsweise vollständig mit dem erfindungsgemäßen Verfahren vorbereitet werden, d. h. durch Aufbringen einer vordefinierten Oberflächenstruktur und anschließende Reinigung. Die so vorbereitete Reifenkomponente wird anschließend an der für die Anbringung vorbestimmten Stelle im Fahrzeugreifen platziert und dort beispielsweise mit einem Vulkanisationsprozess fixiert.

Es kann als Vorteil des erfindungsgemäßen Verfahrens gesehen werden, dass dieses hinsichtlich der bearbeitbaren Kautschukmischungen eine hohe Flexibilität aufweist, wobei nach Einschätzung des Erfinders vor allen Dingen solche Kautschukmischungen geeignet sind, die zumindest ein Dienkautschuk und einen Füllstoff umfassen, wie es vorstehend definiert ist.

Das erfindungsgemäße Verfahren ist zudem geeignet, auch eine breite Palette an Materialien zu bearbeiten, bei denen es sich nicht um Kautschukmischungen oder Gummiwerkstoffe handelt, beispielsweise Metalle. Mit Blick auf die in der Reifenfertigung erforderlichen Arbeitsschritte ist es jedoch explizit bevorzugt, dass das Bearbeiten durch Bearbeiten der jeweiligen Kautschukmischung der Reifenkomponenten erfolgt. Dies ist insbesondere vorteilhaft, weil für die Bearbeitung verschiedener Kautschukmischungen die Betriebsparameter des verwendeten Bearbeitungslasers nicht oder nur geringfügig angepasst werden müssen, sodass eine große Palette von unterschiedlichen Reifenkomponenten in sehr kurzer Zeit bearbeitet werden kann, ohne dass die Betriebsparameter des Bearbeitungslasers beispielsweise auf die Bearbeitung von Metallen umgestellt werden müssten. Bevorzugt ist daher ein erfindungsgemäßes Verfahren, wobei das Bearbeiten in Verfahrensschritt c1) durch Bearbeiten der unvulkanisierte oder zumindest teilweise vulkanisierte erste Kautschukmischung erfolgt.

Es kann als Vorteil des erfindungsgemäßen Verfahrens gesehen werden, dass dieses in effizienter Weise als kontinuierliches Verfahren betrieben werden kann. Hierbei hat es sich als besonders vorteilhaft erwiesen, eine oder beide Reifenkomponenten durch die für die Durchführung des Verfahrens verwendete Vorrichtung zu führen, d. h. nacheinander an dem Bearbeitungslaser und der Reinigungsvorrichtung vorbei. Bevorzugt ist deshalb ein erfindungsgemäßes Verfahren, wobei die erste Reifenkomponente und/oder die zweite Reifenkomponente im Verfahren auf einer Fördervorrichtung befördert oder in einer Vorrichtung um die eigene Achse herum rotiert wird.

**In** eigenen Experimenten hat sich gezeigt, dass das erfindungsgemäße Verfahren besonders geeignet ist, solche Reifenkomponenten vorzubereiten, die mittels eines 3D-Druckverfahrens hergestellt wurden. Bei solchen Reifenkomponenten wird die unbehandelte Oberflächenbeschaffenheit regelmäßig als unzureichend empfunden, um allein damit eine ausreichende Verbindfestigkeit zu erreichen. Gleichzeitig ermöglicht es der Einsatz eines Bearbeitungslasers zur materialabtragenden Bearbeitung vorteilhafterweise, die teilweise sehr filigranen Strukturen, wie sie in einem 3D-Druckverfahren herstellbar sind, präzise zu bearbeiten, ohne durch die Bearbeitung feine Strukturelemente zu zerstören. Bevorzugt ist somit ein erfindungsgemäßes Verfahren, wobei das Herstellen der ersten Reifenkomponente und/oder der zweiten Reifenkomponente durch ein additives Fertigungsverfahren, bevorzugt durch ein 3D-Druckverfahren, erfolgt.

Das erfindungsgemäße Verfahren hat sich insbesondere für die Applikation von elektronischen Bauteilen bewährt, die in einer Kautschukmischung eingebettet sind und an einem Fahrzeugreifen befestigt werden sollen, beispielsweise nach der Vulkanisation des Fahrzeugreifens. Hierbei ist es besonders vorteilhaft, dass die für die Verbindung vorgesehenen Oberflächen entsprechender Reifenkomponenten in besonders reproduzierbarer Form mit einer vorbestimmten Oberflächenstruktur versehen werden können, die vorteilhafterweise exakt auf die Bedürfnisse der Bauteiloberfläche am Reifen abgestimmt werden können, die für die Verbindung vorgesehen ist. Erfindungsgemäß ist deshalb ein erfindungsgemäßes Verfahren, wobei die erste Reifenkomponente und/oder die zweite Reifenkomponente ausgewählt ist aus der Gruppe bestehend aus in einer unvulkanisierten oder zumindest teilweise vulkanisierten Kautschukmischung eingebetteten elektronischen Bauteilen, insbesondere elektronischen Sendeeinrichtungen und elektronischen Sensoren. Ebenso erfindungsgemäß ist ein erfindungsgemäßes Verfahren, wobei die erste Reifenkomponente und/oder die zweite Reifenkomponente ausgewählt ist aus der Gruppe bestehend aus Aufnahmekörpern für elektronische Bauteile, insbesondere elektronische Sendeeinrichtungen und elektronischen Sensoren, wobei die elektronischen Bauteile bevorzugt in eine unvulkanisierte oder zumindest teilweise vulkanisierte Kautschukmischung oder einen anderen Kunststoff, beispielsweise einen Thermoplasten oder Duroplasten, eingebettet sind.

Zum effizienten Erzeugen der vordefinierten Oberflächenstruktur ist es zielführend, den für das Bearbeiten verwendeten Bearbeitungslaser relativ zu der Oberfläche der Reifenkomponente zu bewegen, wobei der Verlauf des Bearbeitungslasers zusammen mit dessen Betriebsparametern, beispielsweise Pulslänge, Leistung oder Durchmesser, beispielsweise in einer ersten Arbeitsanweisung gespeichert werden kann, die eine Steuereinheit dazu veranlassen, die vordefinierte Oberflächenstruktur auf der Oberfläche der Reifenkomponente zu erzeugen.

Auch wenn es prinzipiell möglich wäre, die vordefinierte Oberflächenstruktur mithilfe des Bearbeitungslasers in einem manuellen oder zumindest teilweise manuellen Verfahren auszuführen, ist es explizit bevorzugt, wenn das Bearbeiten durch eine Steuereinheit automatisiert wird. Für eine möglichst autarke Verfahrensführung ist es dabei zielführend, wenn die Steuereinheit mit einer Speichereinheit verbunden ist, auf der Informationen über die vordefinierte erste Oberflächenstruktur gespeichert sind. Dies kann in Übereinstimmung mit dem fachmännischen Verständnis beispielsweise mit einem CAD-Modell erfolgen, welches anschließend in einem laserbasierten CAM-Verfahren auf der Oberfläche der ersten Reifenkomponente ausgeführt wird. Bevorzugt ist somit ein erfindungsgemäßes Verfahren, wobei das Bearbeiten durch eine bahnförmige Führung des Bearbeitungslasers über die Oberfläche der ersten Reifenkomponente erfolgt, bevorzugt mit einem automatischen Bewegungssystem, besonders bevorzugt mit einem Roboterarm, wobei die bahnförmige Führung bevorzugt durch eine Steuereinheit vorgegeben und veranlasst wird. Bevorzugt ist auch ein erfindungsgemäßes Verfahren, wobei das Bearbeiten in Verfahrensschritt b) durch eine Steuerungsvorrichtung gesteuert wird, wobei die Steuerungsvorrichtung bevorzugt mit einer Speichereinheit verbunden ist, wobei die Speichereinheit besonders bevorzugt Informationen über die vordefinierte erste Oberflächenstruktur, bevorzugt in der Form eines CAD-Modells, umfasst.

Im Lichte der vorstehenden Ausführungen kann der Fachmann einen für seine Zwecke und die von ihm zu bearbeitenden Materialien geeigneten Bearbeitungslaser zwanglos auswählen, wobei er im Zweifelsfall das Absorptionsverhalten des zu bearbeitenden Materials berücksichtigt. Der Erfinder der vorliegenden Erfindung konnten jedoch insoweit besonders geeignete Bearbeitungslaser und Wellenlängenbereiche identifizieren, mit denen sich in eigenen Experimenten der Erfinder gute Ergebnisse bei der Bearbeitung von Kautschukmischungen und daraus herstellbaren Gummiwerkstoffen ergeben haben. Bevorzugt ist ein erfindungsgemäßes Verfahren, wobei der Bearbeitungslaser ein CO₂-Laser oder ein Faserlaser ist. Bevorzugt ist dabei ein erfindungsgemäßes Verfahren, wobei der Bearbeitungslaser eine Wellenlänge im Bereich von 0,5 bis 12,0 µm, bevorzugt im Bereich von 1,0 bis 2,0 µm oder im Bereich von 10,0 bis 12,0 µm, aufweist. Bevorzugt ist ein erfindungsgemäßes Verfahren, wobei die Leistung des Bearbeitungslasers im Bereich von 50 bis 250 W, bevorzugt im Bereich von 75 bis 200 W, liegt. Bevorzugt ist ein erfindungsgemäßes Verfahren, wobei die Abtragsrate im Bereich von 2 bis 10 cm²/s/100 W, bevorzugt im Bereich von 4 bis 6 cm²/s/100 W, liegt.

Auch wenn prinzipiell der Einsatz einer Vielzahl von möglichen Reinigungsvorrichtungen denkbar ist, beispielsweise der Einsatz von Drahtbürsten oder ähnlichen mechanischen Reinigungsvorrichtungen, hat sich insbesondere der Einsatz von Reinigungslasern als besonders vorteilhaft erwiesen, da mit diesen eine besonders effiziente Reinigung der Oberfläche möglich ist und sich Reinigungslaser besonders gut dafür eignen, solche Oberflächenbelegung, welche durch die materialabtragende Bearbeitung mit einem Bearbeitungslaser erzeugt wurden, zu entfernen. Reinigungslaser sind aus dem Stand der Technik bekannt und können vom Fachmann in Abhängigkeit der Beschaffenheit des zu reinigenden Materials ausgewählt werden. Bevorzugt ist ein erfindungsgemäßes Verfahren, wobei die Reinigungsvorrichtung einen Reinigungslaser und/oder einen Trockeneisstrahler, bevorzugt einen Reinigungslaser, umfasst. Bevorzugt ist ein erfindungsgemäßes Verfahren, wobei der Reinigungslaser ein Faserlaser ist. Bevorzugt ist dabei ein erfindungsgemäßes Verfahren, wobei der Reinigungslaser eine Wellenlänge im Bereich von 0,5 bis 4,0 µm, bevorzugt im Bereich von 1,0 bis 2,0 µm, aufweist. Bevorzugt ist ein erfindungsgemäßes Verfahren, wobei die Leistung des Reinigungslasers im Bereich von 250 bis 750 W, bevorzugt im Bereich von 400 bis 600 W, liegt. Bevorzugt ist ein erfindungsgemäßes Verfahren, wobei die Abtragsrate des Reinigungslasers im Bereich von 2 bis 8 cm²/s/100 W, bevorzugt im Bereich von 3 bis 5 cm²/s/100 W, liegt. Besonders bevorzugt ist ein erfindungsgemäßes Verfahren, wobei der Reinigungslasers ein gepulster Laser ist, wobei die maximale Pulsenergie bevorzugt im Bereich von 30 bis 70 mJ, besonders bevorzugt im Bereich von 40 bis 60 mJ, liegt. Für den Fachmann ist klar, dass es sich bei dem Bearbeitungslaser und dem Reinigungslaser um separate Laser handelt, sodass die Oberflächen in dem erfindungsgemäßen Verfahren nacheinander mit zwei Lasern bearbeitet werden, deren Betriebsparameter sich unterscheiden. Der Fachmann ist in der Lage, bei Laser, die sich potentiell als Bearbeitungslaser und als Reinigungslaser eignen, durch Anpassung der Betriebsparameter, insbesondere der Expositionszeit des bearbeiteten Materials und Einstellen eines gepulsten bzw. kontinuierlichen Betriebs, diesen entweder als Bearbeitungslaser oder als Reinigungslaser zu verwenden. Ein Bearbeitungslaser ist insbesondere ein Laser, dessen Betriebsparameter eine Einkopplung des Laserstrahls in das Bauteilmaterial und damit einen Materialabtrag ermöglichen. Der Reinigungslaser soll hingegen vorzugsweise nicht in das Bauteilmaterial einkoppeln und Material abtragen, sondern bedingt durch anderer Betriebsparameter Verschmutzungen und Reste von der Oberfläche entfernen.

Es kann als großer Vorteil des erfindungsgemäßen Verfahrens gesehen werden, dass sich dieses effizient mit dem Einsatz eines Adhäsivstoffs verbinden lässt. Durch die kontrollierte Strukturierung der Oberfläche lässt es sich dabei insbesondere vermeiden, dass keine makroskopischen Erhebungen vorliegen, die aus der applizierten Schicht an Adhäsivstoff herausragen könnten, sodass das Auftreten von Schwachstellen im Schichtverbund effizient verhindert werden kann. Es ist nämlich vorteilhaft, die Strukturtiefe und den Strukturverlauf der Oberflächen der Reifenkomponenten bei Einsatz eines Adhäsivstoffs anzupassen. Bei einem zwischen zwei Reifenkomponenten angeordneten fluiden Adhäsivstoff ist für einen besonders vorteilhaften und vollflächigen Kontakt die Schichtdicke des Fluids zu berücksichtigen, d.h. die Strukturtiefen der Oberfläche Reifenkomponenten sollten sinnvollerweise die maximale Schichtdicke bzw. Volumen des dazwischen platzierten Fluids nicht überschreiten. Bevorzugt ist deshalb ein erfindungsgemäßes Verfahren, wobei das Verbinden der ersten Reifenkomponente und der zweiten Reifenkomponente mit einer Schicht eines Verbindungshilfsmittels, bevorzugt eines Adhäsivstoffs, erfolgt, welche zwischen der ersten Reifenkomponente und der zweiten Reifenkomponente angeordnet wird, wobei die erste Oberflächenstruktur und/oder die zweite Oberflächenstruktur bevorzugt keine Erhebungen umfasst, die höher sind als die Dicke der Schicht und/oder keine Erhebungen umfasst, die ins Summe höher sind als die Dicke der Schicht. Als Adhäsivstoffe sind insoweit Stoffe zu verstehen die zur Steigerung der Adhäsion zwischen zwei Kontaktpartnern platziert werden können, wenn sich die Kontaktpartner aufgrund ihrer physikalisch-chemischen Oberflächenbeschaffenheit andernfalls nicht oder nur unzureichend verbinden lassen.

Nach Einschätzung des Erfinders der vorliegenden Erfindung ist es besonders vorteilhaft, dass im erfindungsgemäßen Verfahren nicht nur die Oberfläche einer Reifenkomponente mit dem entsprechenden Verfahren behandelt wird, sondern dass zumindest auch die Oberflächenstrukturierung an der zweiten Reifenkomponente vorgenommen wird. Hierdurch werden zwei Reifenkomponenten mit hohen Oberflächenrauigkeiten und entsprechend großen absoluten Oberflächen erhalten, die sich ausgezeichnet miteinander verbinden lassen, insbesondere wenn auch die Oberfläche der zweiten Reifenkomponente zusätzlich einem Reinigungsverfahren unterzogen wird. Erfindungsgemäß ist entsprechend ein erfindungsgemäßes Verfahren, zusätzlich umfassend den Verfahrensschritt:
c3) Bearbeiten zumindest einer Oberfläche der zweiten Reifenkomponente mit einem Bearbeitungslaser in einem materialabtragenden Verfahren zum Erzeugen einer vordefinierten zweiten Oberflächenstruktur auf der bearbeiteten Oberfläche der zweiten Reifenkomponente,
sowie optional den Verfahrensschritt:
   c4) Reinigen der bearbeiteten Oberfläche der zweiten Reifenkomponente im Bereich der zweiten Oberflächenstruktur mit einer Reinigungsvorrichtung zum Erhalt einer gereinigten bearbeiteten Oberfläche der zweiten Reifenkomponente,
   wobei das Verbinden der ersten Reifenkomponente mit der zweiten Reifenkomponente an der bearbeiteten Oberfläche oder der gereinigten bearbeiteten Oberfläche der zweiten Reifenkomponente im Bereich der zweiten Oberflächenstruktur erfolgt.

Ein ganz besonders vorteilhaftes Verfahren wird dabei erhalten, wenn das Bearbeiten in beiden Fällen auf der jeweiligen Kautschukmischung erfolgt, da dies vorteilhafterweise für beide Reifenkomponenten mit der gleichen Vorrichtung, d.h. dem gleichen Bearbeitungslaser, erfolgen kann, wodurch eine besonders effiziente Verfahrensführung möglich ist. Bevorzugt ist deshalb ein erfindungsgemäßes Verfahren, wobei das Bearbeiten in Verfahrensschritt c3) durch Bearbeiten der unvulkanisierte oder zumindest teilweise vulkanisierte zweiten Kautschukmischung erfolgt.

Ganz besonders bevorzugt erfolgen auch das Bearbeiten und/oder Reinigen der Oberfläche der zweiten Reifenkomponente wie vorstehend für die erste Reifenkomponente beschrieben. Für den Fachmann versteht sich, dass bei dieser Verfahrensführung das Verbinden der beiden Reifenkomponenten auch jeweils an den bearbeiteten Oberflächen erfolgt, sodass sich die Vorbereitung der beiden Oberflächen positiv auf die Verbundfestigkeit auswirkt.

Es kann als besonderer Vorteil der kontrollierten Verfahrensführung des erfindungsgemäßen Verfahrens gesehen werden, dass die auf den jeweiligen Oberflächen erzeugten Oberflächenstrukturen präzise aufeinander abgestimmt werden können, worin der Erfinder der vorliegenden Erfindung einen besonderen Vorteil der vorliegenden Erfindung sieht. Aus Gründen der Effizienz können die Oberflächen im Wesentlichen identisch ausgeführt werden, indem die erste vordefinierte Oberflächenstruktur und die zweite vordefinierte Oberflächenstruktur durch die gleiche vordefinierte Oberflächenstruktur gebildet werden, sodass auf den Materialien im Wesentlichen die gleiche Oberflächenstruktur eingestellt wird. Dies ist vorteilhaft, weil somit mit dem gleichen Verfahren und der gleichen Vorrichtung ohne eine Anpassung sowohl die erste als auch die zweite Reifenkomponente bearbeitet werden können, was mit Blick auf die Zeit- und Kosteneffizienz Vorteile bringt. Darüber hinaus werden hierdurch zwei Oberflächen mit im Wesentlichen gleicher mittlerer Rauheit erhalten, was ebenfalls in einer besonders belastbaren Verbindung resultiert. Ganz besonders bevorzugt ist es jedoch, wenn die beiden Oberflächenstrukturen komplementär zueinander ausgebildet werden, d. h. so ausgebildet werden, dass die eine Oberflächenstruktur im Wesentlichen das Negativ der anderen Oberflächenstruktur ist, sodass die bearbeiteten Oberflächenstrukturen besonders effizient ineinandergreifen können. Beispielsweise ist dies möglich, indem auf beiden Oberflächen komplementäre Abfolgen von Erhebungen und Vertiefungen erzeugt werden, die beim Verbinden der Flächen ineinandergreifen können. Erfindungsgemäß ist vor diesem Hintergrund ein erfindungsgemäßes Verfahren, wobei die vordefinierte erste Oberflächenstruktur und die vordefinierte zweite Oberflächenstruktur im Wesentlichen identisch oder komplementär zueinander, bevorzugt komplementär zueinander, sind.

Bedingt durch die zumeist kleinen Dimensionen der erzeugten Oberflächenstrukturen, lassen sich vorteilhafterweise bereits bei einem minimalen Versatz auch bei identischen Oberflächenstrukturen häufig günstige Verzahnungen erreichen, weil beispielsweise die Vorsprünge jeder Oberfläche leicht versetzt nebeneinander angeordnet werden.

Für den Fachmann ist klar, dass sich eine Verbesserung der Verbundfestigkeit beim Verbinden der Reifenkomponenten auch dann ergibt, wenn lediglich ein kleiner Teil der zum Verbinden vorgesehenen Kontaktfläche mit dem erfindungsgemäßen Verfahren behandelt wird. Selbstverständlich ist es jedoch bevorzugt, wenn die für die Verbindung vorgesehene Oberfläche, bzw. der für die Verbindung vorgesehene Teilabschnitt einer Oberfläche, großflächig, insbesondere im Wesentlichen vollständig, mit dem erfindungsgemäßen Verfahren bearbeitet werden. In analoger Weise ist es auch bevorzugt, wenn auch die Reinigung großflächig erfolgt. Bevorzugt ist somit ein erfindungsgemäßes Verfahren, wobei 70 % oder mehr, bevorzugt 80 % oder mehr, besonders bevorzugt 90 % oder mehr, der Oberfläche der ersten Reifenkomponente und/oder der Oberfläche der zweiten Reifenkomponente bearbeitet werden, und/oder wobei die Oberfläche der ersten Reifenkomponente und/oder die Oberfläche der zweiten Reifenkomponente beim Verbinden an der Kontaktfläche zu 70 % oder mehr, bevorzugt 80 % oder mehr, besonders bevorzugt 90 % oder mehr, über eine bearbeitete Oberfläche verfügen. Bevorzugt ist ebenfalls ein erfindungsgemäßes Verfahren, wobei 70 % oder mehr, bevorzugt 80 % oder mehr, besonders bevorzugt 90 % oder mehr, der Oberfläche der ersten Reifenkomponente und/oder der Oberfläche der zweiten Reifenkomponente gereinigt werden, und/oder wobei die Oberfläche der ersten Reifenkomponente und/oder die Oberfläche der zweiten Reifenkomponente beim Verbinden an der Kontaktfläche zu 70 % oder mehr, bevorzugt 80 % oder mehr, besonders bevorzugt 90 % oder mehr, über eine gereinigte bearbeitete Oberfläche verfügen.

Für eine weitere Optimierung der Verbundfestigkeit des Komponentenverbundes und zur Steigerung der Anwendbarkeit des erfindungsgemäßen Verfahrens auch für schwierig zu verbindenden Materialien, schlägt der Erfinder der vorliegenden Erfindung vor, zusätzlich eine Aktivierung der bearbeiteten Oberflächen vorzusehen. Der laserbasierte Prozess kann in einigen Fällen beim Einkoppeln des Bearbeitungslasers in das zu bearbeitende Material der Reifenkomponente nämlich in der Art zu Verbrennungen und Zersetzungen führen, dass die so behandelten Oberflächen weniger klebfreudig bzw. chemisch zumindest teilweise inaktiv sind. Für viele Verbindungsverfahren, beispielsweise Klebprozesse und Vulkanisationsprozesse sind jedoch offene, anhaftungsfreudige Moleküle bzw. polare Gruppen an der Oberfläche wünschenswert. Dies kann durch eine geeignete Oberflächenaktivierung sichergestellt werden. Bevorzugt ist deshalb ein erfindungsgemäßes Verfahren, zusätzlich umfassend vor Verfahrensschritt d) einen oder beide der Verfahrensschritte:
c5) Aktivieren der gereinigten bearbeiteten Oberfläche der ersten Reifenkomponente mit einer Aktivierungsvorrichtung, und/oder
c6) Aktivieren der bearbeiteten Oberfläche oder der gereinigten bearbeiteten Oberfläche der zweiten Reifenkomponente mit einer Aktivierungsvorrichtung.

Der Erfinder der vorliegenden Erfindung schlägt für die Oberflächenaktivierung dabei ausgewählte Prozesse vor, wobei insbesondere die Aktivierung mit einem Strahl-Plasma vorteilhaft ist, bei dem eine Plasmadüse die bearbeitete und gereinigte Oberfläche mit einem Plasma bestreicht, welches vorteilhafterweise hinsichtlich der Prozessgase an die verwendeten Materialien der Reifenkomponenten angepasst werden kann. Dabei werden Moleküle an der Oberfläche der Reifenkomponenten aufgebrochen und die Oberfläche somit anhaftungsfreudiger gemacht, was sich beispielsweise mittels einer XPS-Analyse nachweisen lässt. In der bevorzugten Ausführungsform des erfindungsgemäßen Verfahrens wird die Oberfläche mittels der Aktivierung stellenweise oder vollflächig anhaftungsfreudig geöffnet und damit für die anschließende Verbindung der Reifenkomponenten vorbereitet, wodurch eine festere Verbindung des Verbundes erreicht werden kann. Bevorzugt ist folglich ein erfindungsgemäßes Verfahren, wobei das Aktivieren mit einer Plasma-Aktivierung und/oder mit einer Koronabehandlung erfolgt, wobei die Plasma-Aktivierung und/oder die Koronabehandlung bevorzugt mit einem Prozessgas erfolgt, welches ausgewählt ist aus der Gruppe bestehend aus Sauerstoff, Wasserstoff, Tetrafluormethan, Argon, Helium und Schwefelhexafluorid.

Als Alternative zu den vorstehend als bevorzugt bezeichneten Aktivierungen können prinzipiell auch andere dem Fachmann geläufige Aktivierungsmethoden eingesetzt werden, wobei insbesondere die chemische Aktivierung durch das chemische Aufbrechen der Moleküle an der Oberfläche, beispielsweise im Rahmen eines Ätzverfahrens, in Frage kommt. Ein entsprechendes Verfahren ist jedoch durch den Einsatz von Beizmitteln und/oder Lösemitteln in den meisten Fällen mit erheblichem Aufwand verbunden, was zusammen mit der auftretenden Schadstoffbelastung dazu führt, dass entsprechende Verfahrensführungen gegenüber den vorstehend offenbarten Aktivierungsmethoden weniger bevorzugt sind.

Um eine möglichst effiziente Bearbeitung und Reinigung der Oberfläche zu gewährleisten, schlägt der Erfinder vor, an den jeweiligen Vorrichtungen zudem Absaugeinheiten anzuordnen, die bei der Bearbeitung auftretende Verunreinigung unmittelbar von der Oberfläche entfernen und damit die Reinigung bzw. Aktivierung unterstützen können. Bevorzugt ist ein erfindungsgemäßes Verfahren, wobei am Bearbeitungslaser und/oder an der Reinigungsvorrichtung und/oder an der Aktivierungsvorrichtung eine Absaugeinheit angeordnet ist.

Grundsätzlich lassen sich mit dem erfindungsgemäßen Verfahren eine Vielzahl von vordefinierten Oberflächenstrukturen erzeugen, wobei sich prinzipiell auch mit größeren Oberflächenstrukturen vorteilhafte Ergebnisse erzielen lassen. Als besonders vorteilhaft hat sich das erfindungsgemäße Verfahren jedoch erwiesen, wenn auf der Oberfläche Vertiefungen mit einer vergleichsweise geringen mittleren Tiefe erzeugt werden, da sich hierdurch eine besonders große absolute Oberfläche erreichen lässt, die makroskopische Verbindbarkeit der mit bloßem Auge als im Wesentlichen glatt empfundenen Oberflächen jedoch vorteilhafterweise gewährleistet werden kann. Erfindungsgemäß ist deshalb ein erfindungsgemäßes Verfahren, wobei die erste Oberflächenstruktur und/oder die zweite Oberflächenstruktur eine Vielzahl von Vertiefungen, bevorzugt rillenförmige oder gitterförmige Vertiefungen, umfasst, wobei die Vertiefungen eine mittlere Tiefe im Bereich von 10 bis 200 µm, bevorzugt im Bereich von 30 bis 150 µm, besonders bevorzugt im Bereich von 50 bis 100 µm, aufweisen. Von dem im Rahmen der Erfindung offenbarten Ausführungsformen sind jeweils solche explizit bevorzugt, welche Vertiefungen mit einer vergleichsweise niedrigen mittleren Tiefe erzeugen, wie es vorstehend definiert ist.

Dem Erfinder ist es gelungen, besonders geeignete Oberflächenstrukturen zu identifizieren, welche beim Verbinden der Reifenkomponenten zu ausgezeichneten Verbundfestigkeiten führen. Bevorzugt ist nämlich ein erfindungsgemäßes Verfahren, wobei die erste Oberflächenstruktur und/oder die zweite Oberflächenstruktur kreuzförmig und/oder gitterförmig angeordnete Strukturen, insbesondere Vertiefungen, umfasst. Bevorzugt ist auch ein erfindungsgemäßes Verfahren, wobei die erste Oberflächenstruktur und/oder die zweite Oberflächenstruktur eine Vielzahl von Vertiefungen umfasst, wobei die Tiefe der Vertiefungen entlang zumindest einer Ausdehnungsrichtung der Oberfläche variiert. Bevorzugt ist zudem ein erfindungsgemäßes Verfahren, wobei die erste Oberflächenstruktur und/oder die zweite Oberflächenstruktur eine Vielzahl von äquidistanten Vorsprüngen umfasst. Bevorzugt ist darüber hinaus ein erfindungsgemäßes Verfahren, wobei die erste Oberflächenstruktur und/oder die zweite Oberflächenstruktur eine Vielzahl von wiederkehrenden Struktureinheiten umfasst, wobei die wiederkehrenden Struktureinheiten die gleichen Strukturelemente umfassen.

Eine besonders relevante Ausführungsform ist es, auf der Oberfläche einer oder beider Komponenten Rillen vorzusehen, die sich vorteilhafterweise mit einem kontinuierlich arbeitenden Bearbeitungslaser auch besonders effizient erzeugen lassen. Durch die relative Anordnung dieser Rillen lassen sich zudem die Eigenschaften des erhaltenen Komponentenverbundes beeinflussen. Der Fachmann ist für einen vorgegebenen Komponentenverbund nämlich zwanglos in der Lage, die spätere Hauptbelastungsrichtung anzugeben, d. h. die Richtung zu benennen, in der der hergestellte Komponentenverbund die stärksten mechanischen Belastungen erfahren wird. Hierbei ist es ganz besonders bevorzugt, die Rillen im Wesentlichen orthogonal zur vorbestimmten Hauptbelastungsrichtung auszuführen, da hierdurch bei auf Scherung beanspruchten Bauteilen durch die quer zur Scherbeanspruchung eingebrachten Strukturen eine erhöhte Belastbarkeit durch Vergrößerung der kraftaufnehmenden Fläche im Formschluss und eine mikroskopisch bzw. makroskopische Verzahnung der Elemente erreicht werden kann, die sich beispielsweise auch bei Anordnung eines Adhäsivstoffs zwischen den Flächen vorteilhaft auswirkt. Bevorzugt ist deshalb ein erfindungsgemäßes Verfahren, wobei die erste Oberflächenstruktur und/oder die zweite Oberflächenstruktur eine Vielzahl von Rillen umfasst, wobei die Rillen bevorzugt im Wesentlichen orthogonal zur vorbestimmten Hauptbelastungsrichtung des Komponentenverbundes verlaufen oder wobei die Rillen bevorzugt im Wesentlichen parallel zur vorbestimmten Hauptbelastungsrichtung des Komponentenverbundes verlaufen.

Eine ganz besonders vorteilhafte Ausführungsform des erfindungsgemäßen Verfahrens ergibt sich dann, wenn die hohe Präzision des erfindungsgemäßen Verfahrens verwendet wird, um vor der Verbindung der Reifenkomponenten zusätzlich Festigkeitsträger in einer präzise vordefinierten Art und Weise auf der Oberfläche zu platzieren. Durch das Erzeugen von Vertiefungen in der Oberflächenstruktur können die Festigkeitsträger gezielt in den Vertiefungen eingelagert werden, wobei die Festigkeitsträger vorteilhafterweise beispielsweise genau entlang der vorbestimmten Hauptbelastungsrichtung des Komponentenverbundes angeordnet werden können, wenn die Vertiefungen als Rillen ausgeführt werden, die wie vorstehend beschrieben im Wesentlichen parallel zur Hauptbelastungsrichtung verlaufen. Bevorzugt ist deshalb ein erfindungsgemäßes Verfahren, zusätzlich umfassend vor Verfahrensschritt d) den Verfahrensschritt:
c7) Anordnen von einem oder mehreren Festigkeitsträgern in den Vertiefungen der vordefinierten ersten Oberflächenstruktur der gereinigten bearbeiteten Oberfläche der ersten Reifenkomponente und/oder der zweiten Reifenkomponente.

Im Gegensatz zu einer normalen Zuführung von Festigkeitsträgern bei herkömmlichen Reifenkomponenten, bei der nur etwas mehr als die Hälfte der Fasern in der Vorzugsrichtung der erwarteten Belastung liegen, bleibt die Anordnung der Festigkeitsträger in Belastungsrichtung bei Einlagerung in die gelaserten Strukturen im weiteren Produktionsverlauf weitgehend erhalten, wodurch die Belastbarkeit des Bauteils in Verlaufsrichtung der Festigkeitsträger vorteilhafterweise gesteigert wird.

Als Festigkeitsträger können vorteilhafterweise solche Materialien eingesetzt werden, die im Bereich der Reifenfertigung häufig als Festigkeitsträger zum Einsatz kommen. Bevorzugt ist entsprechend ein erfindungsgemäßes Verfahren, wobei die Festigkeitsträger textile Festigkeitsträger oder metallische Festigkeitsträger, bevorzugt textile Festigkeitsträger, sind. Bevorzugt ist insoweit ein erfindungsgemäßes Verfahren, wobei die Festigkeitsträger ausgewählt sind aus der Gruppe bestehend aus textilen Festigkeitsträgern mit zumindest einem Garn, wobei das Garn bevorzugt aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), bevorzugt ausgewählt ist aus der Gruppe bestehend aus Aramid und Polyethylenterephthalat.

Wie vorstehend erläutert, ist es für die überwiegende Zahl von Anwendungen vorteilhaft, wenn die erste Oberflächenstruktur und/oder die zweite Oberflächenstruktur mit einem CAD-Modell vordefiniert werden, welches beispielsweise in der Speichereinheit einer Steuerungsvorrichtung gespeichert werden kann und im Rahmen eines CAM-Verfahrens bei der Bearbeitung der Oberfläche verwendet wird. Eine explizit herausgestellte Ausführungsform des erfindungsgemäßen Verfahrens, die nach Einschätzung des Erfinders besonders vorteilhaft ist, ist darin zu sehen, dass das CAD-Modell für die Oberflächenstrukturen mit einer Aufnahmeeinrichtung, beispielsweise einem Profilscanner oder einer anderen optischen Bildverarbeitungseinrichtung, aufgenommen wird. Durch dieses besonders vorteilhafte Verfahren ergibt sich eine besonders effiziente Verfahrensführung. Zunächst ist es nämlich vorteilhafterweise möglich, ohne die Notwendigkeit für komplexe Berechnungen ein CAD-Modell für die Oberflächenstrukturen dadurch zu erstellen, dass eine Referenzoberfläche einer Referenzkomponente vermessen wird, deren Oberflächeneigenschaften die notwendigen Voraussetzungen erfüllen und die entsprechend auf der ersten und/oder zweiten Reifenkomponente umgesetzt werden sollen. In einer besonders bevorzugten Ausführungsform dieser Variante kann die Referenzoberfläche dabei mit einem materialabtragenden Verfahren in spezifischer Weise konturiert werden, um somit quasi ein physische Vorlage für die zu erstellenden Oberflächenstrukturen der Reifenkomponenten zu erschaffen. Grundsätzlich bevorzugt ist somit ein erfindungsgemäßes Verfahren, wobei die erste Oberflächenstruktur und/oder die zweite Oberflächenstruktur mit einem CAD-Modell vordefiniert wird. Bevorzugt ist ein erfindungsgemäßes Verfahren, wobei die erste Oberflächenstruktur und/oder die zweite Oberflächenstruktur mit einem CAD-Modell vordefiniert wird, wobei das CAD-Modell für die erste Oberflächenstruktur und/oder die zweite Oberflächenstruktur mit einer Aufnahmeeinrichtung, bevorzugt mit einem Profilscanner, an einer Referenzoberfläche einer Referenzkomponente erstellt wird, wobei die Referenzoberfläche besonders bevorzugt mit einem materialabtragenden Verfahren konturiert wurde. Die mittels der Aufnahmeeinrichtung aufgenommenen realen dreidimensionalen Strukturen können bei der Umsetzung in ein 3D-CAD-Modell dabei ggf. durch einen geeigneten Algorithmus vereinfacht werden, beispielsweise indem besonders kleine Strukturen geglättet werden.

In einer ebenfalls bevorzugten Ausführungsform wird das CAD-Modell für die Oberflächenstruktur einer Oberfläche als Negativ der Oberfläche der anderen Reifenkomponente erzeugt, an der die spätere Verbindung erfolgen soll. Auf diese Weise ist es unter Verwendung einer Aufnahmeeinrichtung vorteilhafterweise möglich, zwischen den zu verbindenden Reifenkomponenten optimal aufeinander abgestimmte Strukturen zu erschaffen, die beispielsweise eine im Wesentlichen identische Oberflächenrauheit und/oder komplementäre Strukturelemente aufweisen. Beispielswiese hat es sich als besonders effizient erwiesen, die bereits strukturierte Oberfläche einer zweiten Reifenkomponente mittels einer Aufnahmeeinrichtung auszulesen, ggf. nach einer chemischen, mechanischen oder strahlungsbasierten Reinigung, und anschließend die so ausgelesene Struktur oder das Negativ der ausgelesenen Struktur als vordefinierte erste Oberflächenstruktur auf der Oberfläche der ersten Reifenkomponente zu erzeugen. Bevorzugt ist entsprechend ein erfindungsgemäßes Verfahren, wobei das CAD-Modell für die erste Oberflächenstruktur und/oder die zweite Oberflächenstruktur als Negativ der mit einer Aufnahmeeinrichtung, bevorzugt mit einem Profilscanner, erfassten Oberfläche einer damit zu verbindenden Oberfläche erstellt wird.

Für den Fachmann ist im Lichte der vorstehenden Ausführungen klar, dass die Erfindung auch im Zusammenhang mit einem Verfahren zur Herstellung eines Fahrzeugreifens steht. Hierbei können die Reifenkomponenten und der daraus erhaltene Komponentenverbund beispielsweise als Teil eines noch unvulkanisierten Fahrzeugreifenrohlings eingesetzt werden. Alternativ kann auch bereits die erste oder die zweite Reifenkomponente ein vulkanisierter Fahrzeugreifen sein, an dem lediglich eine zweite Reifenkomponente im Rahmen des erfindungsgemäßen Verfahrens angebracht werden soll. Das erfindungsgemäße Verfahren kann in bevorzugten Ausgestaltungen mehrmals durchgeführt werden, um beispielsweise eine oder mehrerer weitere Reifenkomponenten mit der ersten Reifenkomponente und/oder der zweiten Reifenkomponente zu verbinden. Die Erfindung betrifft somit auch ein Verfahren zum Herstellen eines Fahrzeugreifens, umfassend die Verfahrensschritte des erfindungsgemäßen zur Verbindung von Reifenkomponenten, zusätzlich umfassend nach Verfahrensschritt d) den Verfahrensschritt:
e) Herstellen eines Fahrzeugreifenrohlings umfassend den Komponentenverbund und Vulkanisieren des Fahrzeugreifenrohlings zum Erhalt eines Fahrzeugreifens,
oder wobei die erste Reifenkomponente oder die zweite Reifenkomponente ein vulkanisierter Fahrzeugreifen ist. Bei den Fahrzeugreifen kann es sich beispielsweise um PKW oder LKW Reifen handeln, jedoch auch um Reifen von Luftfahrzeugen.

Das erfindungsgemäße Verfahren hat sich besonders für die Applikation von Reifenkomponenten mit elektronischen Bauteilen an der Innen- oder Außenseite einer Reifenseitenwand, bevorzugt der Reifeninnenseite, bewährt. Alternativ hat sich das erfindungsgemäße Verfahren jedoch auch zur Vorbereitung von Reifenkomponenten für die Runderneuerung von Reifen, insbesondere die Vorbereitung von Altreifen oder Laufstreifen als leistungsfähig erwiesen. Bevorzugt ist ein erfindungsgemäßes Verfahren, wobei die erste Reifenkomponente eine Reifenseitenwand ist. Bevorzugt ist ein erfindungsgemäßes Verfahren, wobei die erste Reifenkomponente ein Laufstreifen oder ein Altreifen mit einem zumindest teilweise abgetragenen, alten Laufstreifen, bevorzugt ein Laufstreifen, ist.

Die Breite der effizient zu bearbeitenden Oberflächen ist im Wesentlichen von den Abmessungen der eingesetzten Vorrichtungen abhängig. Bevorzugt ist aber ein erfindungsgemäßes Verfahren, wobei die Breite der Oberfläche der Reifenkomponente im Bereich von 100 bis 500 mm, bevorzugt im Bereich von 150 bis 450 mm, besonders bevorzugt im Bereich von 180 bis 400 mm, liegt.

Offenbart wird zudem eine Vorrichtung, die für den Einsatz im erfindungsgemäßen Verfahren besonders geeignet ist und entsprechend einen Bearbeitungslaser und eine nachgelagerte Reinigungsvorrichtung umfasst. Besonders bevorzugt sind Vorrichtungen, welche für die Durchführung des erfindungsgemäßen Verfahrens in bevorzugten Ausführungsformen geeignet sind. Offenbart wird daher eine Vorrichtung zur Vorbereitung von Reifenkomponenten, bevorzugt für den Einsatz in einem erfindungsgemäßen Verfahren, umfassend einen Bearbeitungslaser für die Bearbeitung der Oberfläche einer Reifenkomponente und eine Reinigungsvorrichtung zur Reinigung der bearbeiteten Oberfläche, wobei der Bearbeitungslaser, bevorzugt der Bearbeitungslaser und die Reinigungsvorrichtung, durch eine Steuereinheit gesteuert wird und dazu eigerichtet ist, auf der Oberfläche der Reifenkomponente eine vordefinierte Oberflächenstruktur zu erzeugen.

Bevorzugt ist dabei eine wie vorstehend offenbarte Vorrichtung, zusätzlich umfassend eine Aktivierungsvorrichtung für die Aktivierung der gereinigten Oberfläche der Reifenkomponente.

Bevorzugt ist zudem eine wie vorstehend offenbarte Vorrichtung, wobei die Aktivierungsvorrichtung dazu eingerichtet ist, eine gereinigte Oberfläche mit einer Plasma-Aktivierung und/oder mit einer Koronabehandlung zu aktivieren, wobei die Plasma-Aktivierung und/oder die Koronabehandlung bevorzugt mit einem Prozessgas erfolgt, welches ausgewählt ist aus der Gruppe bestehend aus Sauerstoff, Wasserstoff, Tetrafluormethan, Argon, Helium und Schwefelhexafluorid.

Bevorzugt ist darüber hinaus eine wie vorstehend offenbarte Vorrichtung, wobei am Bearbeitungslaser und/oder an der Reinigungsvorrichtung und/oder an der Aktivierungsvorrichtung eine Absaugeinheit angeordnet ist.

Offenbart wird abschließend auch ein System zur Vorbereitung von Reifenkomponenten, umfassend eine wie vorstehend offenbarte Vorrichtung sowie eine Einrichtung zum Erzeugen eines CAD-Modells einer Referenzoberfläche umfassend, ein mechanisches Konturwerkzeug zum Erzeugen einer strukturierten Referenzoberfläche auf einem Referenzmaterial und eine Aufnahmeeinrichtung, bevorzugt einen Profilscanner, zum Erzeugen des CAD-Modells aus der strukturierten Referenzoberfläche.

Abschließend wird als Aspekt der Erfindung ein alternatives Verfahren zur Verbindung von Reifenkomponenten für den Einsatz in der Reifenfertigung offenbart, umfassend die folgenden Verfahrensschritte:
a) Herstellen oder Bereitstellen einer ersten Reifenkomponente, umfassend eine unvulkanisierte oder zumindest teilweise vulkanisierte erste Kautschukmischung,
b) Herstellen oder Bereitstellen einer zweiten Reifenkomponente, umfassend eine unvulkanisierte oder zumindest teilweise vulkanisierte zweite Kautschukmischung,
c) Bearbeiten zumindest einer Oberfläche der ersten Reifenkomponente mit Trockeneis in einem materialabtragenden Verfahren zum Erzeugen und Reinigen einer vordefinierten ersten Oberflächenstruktur auf der gereinigten bearbeiteten Oberfläche der ersten Reifenkomponente, und
d) Verbinden der ersten Reifenkomponente mit der zweiten Reifenkomponente an der gereinigten bearbeiteten Oberfläche der ersten Reifenkomponente im Bereich der ersten Oberflächenstruktur zum Erhalt eines Komponentenverbundes.

Das alternative Verfahren löst zahlreiche der vorstehend beschriebenen Aufgaben. Bevorzugte Ausführungsformen des alternativen Verfahrens ergeben sich aus den bevorzugten Ausführungsformen des erfindungsgemäßen Verfahrens. Das vorstehend offenbarte alternative Verfahren verwendet für die Bearbeitung der Oberfläche ein materialabtragendes Verfahren unter Einsatz von Trockeneis, wie es beispielsweise bei einem Strahlprozess mit Trockeneis möglich ist. Durch dieses Verfahren ist vorteilhafterweise eine gleichzeitige Bearbeitung und eine Reinigung der Oberfläche möglich. Durch das Sublimieren der Trockeneispartikel nach der Oberflächenbehandlung verbleiben keine Reste des Strahlguts auf der Oberfläche, sodass nicht nur eine strukturierte, sondern gleichzeitig eine gereinigte bearbeitete Oberfläche erhalten wird. Im Vergleich mit dem erfindungsgemäßen Verfahren unter Einsatz eines Lasers ist jedoch die Präzision der vordefinierten Oberflächenstruktur verringert, sodass teilweise nur ein allgemeines Aufrauen der Oberfläche erzielt wird.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung einer beispielhaften Vorrichtung in einer bevorzugten Ausführungsform;
- Fig. 2: eine schematische Darstellung einer beispielhaften Einrichtung zur Erzeugung eines CAD-Modells, welches zusammen mit der Vorrichtung gemäß Fig. 1 ein wie vorstehend offenbartes System bildet;
- Fig. 3: eine schematische Darstellung einer beispielhaften ersten Oberflächenstruktur auf der bearbeiteten Oberfläche einer ersten Reifenkomponente;
- Fig. 4: eine schematische Querschnittsdarstellung eines Kontaktbereichs zwischen zwei Reifenkomponenten in einem beispielhaften Komponentenverbund unter Scherbelastung;
- Fig. 5: eine schematische Darstellung einer beispielhaften ersten Oberflächenstruktur auf der bearbeiteten Oberfläche einer ersten Reifenkomponente mit in den Vertiefungen angeordneten Festigkeitsträgern;
- Fig. 6: eine schematische Darstellung eines beispielhaften Bearbeitungsbahnverlaufs für den im erfindungsgemäßen Verfahren eingesetzten Bearbeitungslaser, welcher sich aus dem CAD-Modell einer vordefinierten Oberflächenstruktur ergibt;
- Fig. 7: eine schematische Darstellung der aus dem Bearbeitungsbahnverlauf gemäß Fig. 6 erzeugten Oberflächenstruktur einer beispielhaften Reifenkomponente;
- Fig. 8: eine schematische Darstellung einer beispielhaften Oberflächenstruktur einer Reifenkomponente;
- Fig. 9: eine Mikroskopaufnahme einer beispielhaften Oberflächenstruktur, welche mit einem mechanischen Konturwerkzeug erzielt wurde.

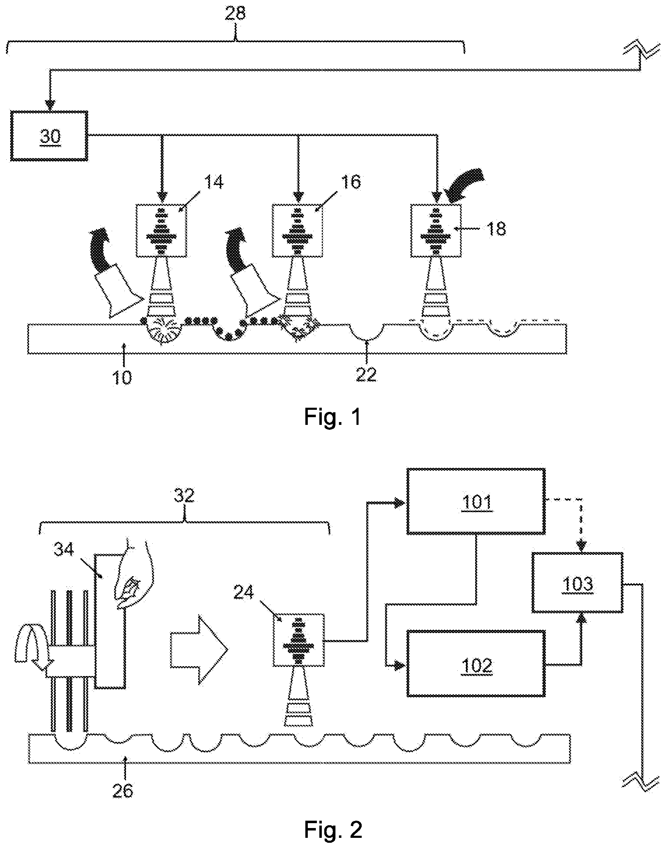

Fig. 1 zeigt eine wie vorstehend offenbarte Vorrichtung 28 in einer bevorzugten Ausführungsform bei der Durchführung des erfindungsgemäßen Verfahrens in einer bevorzugten Ausführungsform. Die Vorrichtung 28 umfasst einen Bearbeitungslaser 14 und eine nachgelagerte Reinigungsvorrichtung 16, an denen jeweils eine Absaugvorrichtung angeordnet ist. Mit dem Bearbeitungslaser 14 wird die Oberfläche einer ersten Reifenkomponente 10 unter Materialabtrag bearbeitet und dadurch eine vordefinierte erste Oberflächenstruktur auf der bearbeiteten Oberfläche der ersten Reifenkomponente 10 erzeugt.

Durch die nachgelagerte Reinigungsvorrichtung 16 wird die so strukturierte Oberfläche sowie benachbarte Bereiche der Oberfläche der ersten Reifenkomponente 10, die nicht vom Bearbeitungslaser 14 bearbeitet wurden, anschließend gereinigt. **In** der in Fig. 1 gezeigten Ausführungsform werden die durch das Bearbeiten erzeugten Vertiefungen 22 nach der Reinigung zudem noch aktiviert, wobei als Aktivierungsvorrichtung 18 ein Plasmastrahler eingesetzt wird, welcher mit einem Prozessgas betrieben wird, was durch den schwarzen Pfeil angedeutet wird. **In** der Ausführungsform gemäß Fig. 1 ist die Reinigungsvorrichtung 16 als Reinigungslaser ausgeführt, welcher das von dem zur Bearbeitung verwendeten Bearbeitungslaser 14 abgetragen und auf der Oberfläche der ersten Reifenkomponente 10 verbleibende Material entfernt. Der Reinigungslaser ist beispielsweise ein gepulster Faserlaser mit einer Wellenlänge von 1064 nm, einer Leistung von 500 W und einer maximalen Pulsenergie von 50 mJ.

Der Bearbeitungslaser 14, die Reinigungsvorrichtung 16 und die Aktivierungsvorrichtung 18 werden gemeinsam durch eine Steuereinheit 30 gesteuert und relativ zur Oberfläche der ersten Reifenkomponente 10 bewegt, wobei die Steuereinheit 30 insbesondere eine vordefinierte Bahnführung für den Bearbeitungslaser 14 vorgibt, mit dem die vordefinierte erste Oberflächenstruktur auf der bearbeiteten Oberfläche der ersten Reifenkomponente 10 erzeugt werden kann.

Diese vordefinierte Bahnführung wurde in dem in Fig. 1 gezeigten Beispiel aus einem CAD-Modell erhalten, welches zuvor an einer realen Oberfläche aufgenommen wurde. Die Erstellung des CAD-Modells ist in Fig. 2 gezeigt. Hierbei wird die Oberfläche einer Referenzkomponente 26 durch ein mechanisches Konturwerkzeug 34 vorstrukturiert. Das mechanische Konturwerkzeug 34 bildet zusammen mit einer Aufnahmeeinrichtung 24, die vorliegend als Profilscanner ausgeführt ist, eine Einrichtung 32 zum Erzeugen eines CAD-Modells. Die mittels der Aufnahmeeinrichtung 24 aufgenommenen Bildinformationen der Referenzoberfläche der Referenzkomponente 26 werden in Verfahrensschritt 101 in einer Datenverarbeitungsvorrichtung mittels Bildverarbeitung ausgewertet. Die Datenverarbeitungsvorrichtung erstellt anschließend in Verfahrensschritt 102 ein 3D-CAD-Model, welches in der in Fig. 2 gezeigten Ausführungsform zudem simplifiziert wird, indem eine Glättung erfolgt, bei der kleine Oberflächenunregelmäßigkeiten geglättet werden.

Ausgehend von dem 3D-CAD-Model erfolgt durch die Datenverarbeitungsvorrichtung in Schritt 103 die Bahnerstellung bzw. die Erstellung der Arbeitsanweisung für den Betrieb des Bearbeitungslasers 14. Diese Informationen werden der Steuereinheit 30 der Fig. 1 zugeführt (durch die unterbrochene Verbindungslinie angezeigt), die daraufhin die Vorrichtung 28 im wie vorstehend offenbarten System steuert.

Bei dem in den Fig. 1 und 2 gezeigten beispielhaften System handelt es sich bei der ersten Reifenkomponente 10 um die Reifeninnenseite eines vulkanisierten Fahrzeugreifens, insbesondere die Oberfläche am Zenit der Reifeninnenseite (Reifenmitte), an welcher als zweite Reifenkomponente 12 ein Aufnahmekörper aus einem vulkanisierten Gummiwerkstoff angeordnet werden soll, der eine Aufnahme für eine in einen Gummiwerkstoff oder einen anderen Kunststoff, beispielsweise einen Thermoplasten oder Duroplasten, eingebettete elektronische Sensoreinheit bildet. Alternativ könnte als zweite Reifenkomponente 12 jedoch auch unmittelbar eine in einer vulkanisierten Kautschukmischung eingebettete elektronische Sende- und Empfangseinheit, beispielsweise ein RFID-Chip, eingesetzt werden. An der bearbeiteten Oberfläche besteht die erste Reifenkomponente 10 entsprechend aus einer üblichen vulkanisierten Kautschukmischung, welche durch Vulkanisation einer vulkanisierbaren Kautschukmischung hergestellt wurde, welche neben einem Dienkautschuk und einem Füllstoff auch Schwefel umfasst.

In der gezeigten Ausführungsform des erfindungsgemäßen Verfahrens wird der Fahrzeugreifen mit einer Fördervorrichtung an dem Bearbeitungslaser 14, der Reinigungsvorrichtung 16 und der Aktivierungsvorrichtung 18 vorbeigeführt, sodass diese die zu bearbeitenden Bereiche des Fahrzeugreifens nacheinander bestreichen können. Für die Bearbeitung wird in dem gezeigten Beispiel ein RMI-Faserlaser mit einer Wellenlänge von 1064 nm und einer Leistung vom etwa 100 W eingesetzt, wobei die Abtragrate etwa 5 bis 6 cm²/s/100W bei einer Scantiefe von 0,05 bis 0,06 mm betrug. In einer besonders bevorzugten Ausführungsform des beispielhaften Verfahrens wird anschließend auch die Oberfläche der zweiten Reifenkomponente mit der in Fig. 1 gezeigten Vorrichtung 28 bearbeitet, gereinigt und aktiviert.

Die in Fig. 1 gezeigten Vertiefungen 22 weisen eine mittlere Tiefe von etwa 60 µm auf und sind als Rillen ausgeführt, die sich orthogonal zur Vorschubrichtung durch die Vorrichtung 28 über die Oberfläche der ersten Reifenkomponente 10 erstrecken.

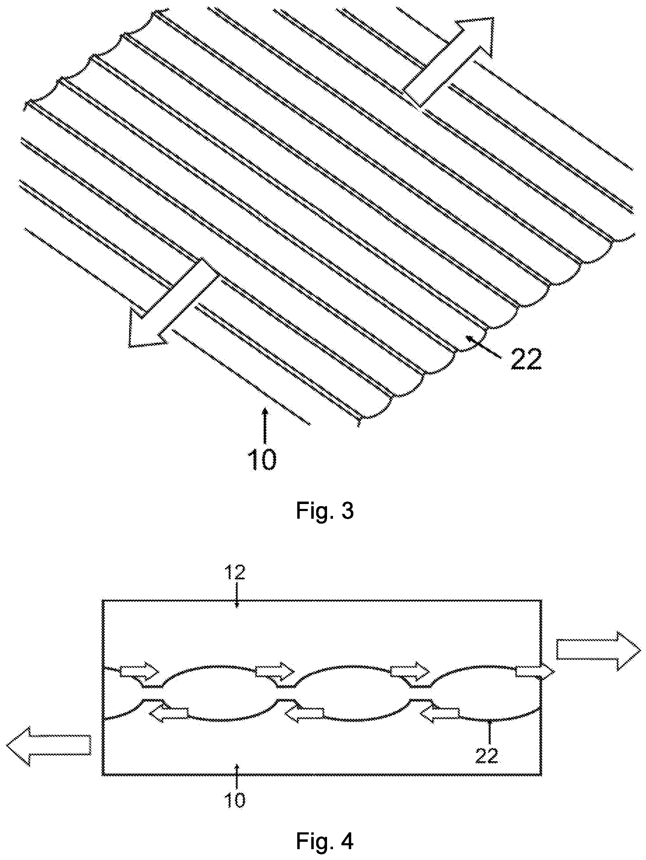

Fig. 3 zeigt eine beispielhafte Oberflächenstruktur mit einer Vielzahl von Rillen, wobei die Rillen im Wesentlichen orthogonal zur vorbestimmten Hauptbelastungsrichtung des späteren Komponentenverbundes verlaufen, wobei die vorbestimmte Hauptbelastungsrichtung durch die Pfeile kenntlich gemacht ist.

Fig. 4 zeigt beispielhaft die Verbindung einer ersten Reifenkomponente 10 und einer zweiten Reifenkomponente 12, bei der die Oberflächen jeweils eine identische Oberflächenstruktur aufweist, die der entspricht, die in Fig. 3 abgebildet ist. Die als Rillen ausgeführten Vertiefungen 22 greifen bei Anlegen einer Scherbelastung zwischen den Reifenkomponenten ineinander bzw. verursachen eine gegenläufige Verdrängung eines zwischen den Reifenkomponenten angeordneten Adhäsivstoffs, wodurch eine besonders hohe Stabilität des Verbundes gegen Scherbelastung erreicht wird.

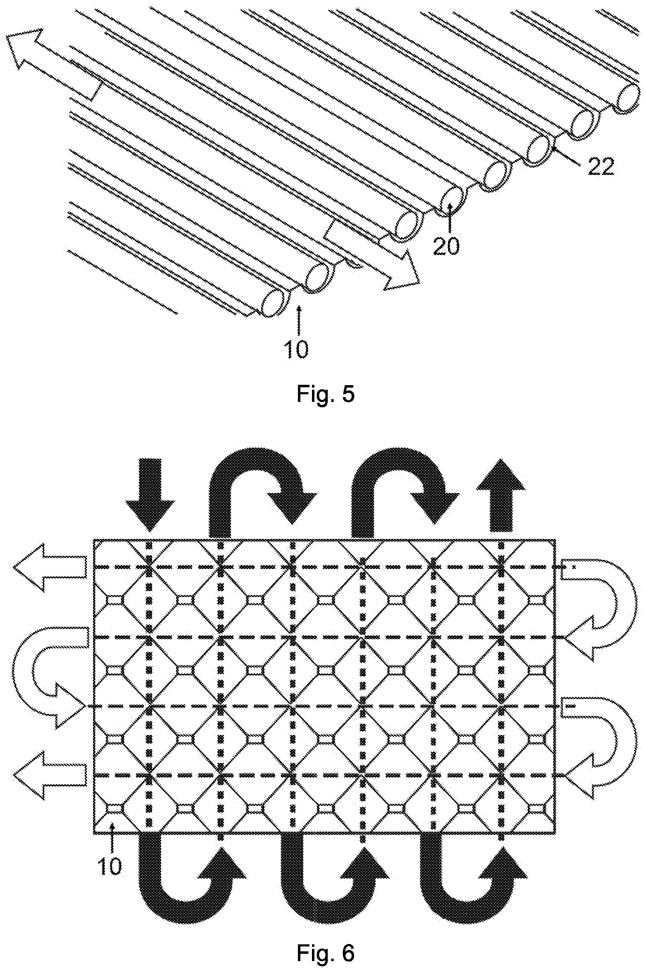

Fig. 5 zeigt ähnlich zu der Ausführungsform der Fig. 3 eine erste Oberflächenstruktur, in der als Rillen ausgeführten Vertiefungen 22 im Wesentlichen parallel zur Hauptbelastungsrichtung verlaufen, die wiederum durch die Pfeile angezeigt wird. In den Vertiefungen 22 sind in der gezeigten Ausführungsform mehrere Festigkeitsträger 20 aus Aramid angeordnet, welche dadurch besonders kontrolliert platziert und exakt auf die vorbestimmte Hauptbelastungsrichtung des späteren Komponentenverbundes abgestimmt werden können.

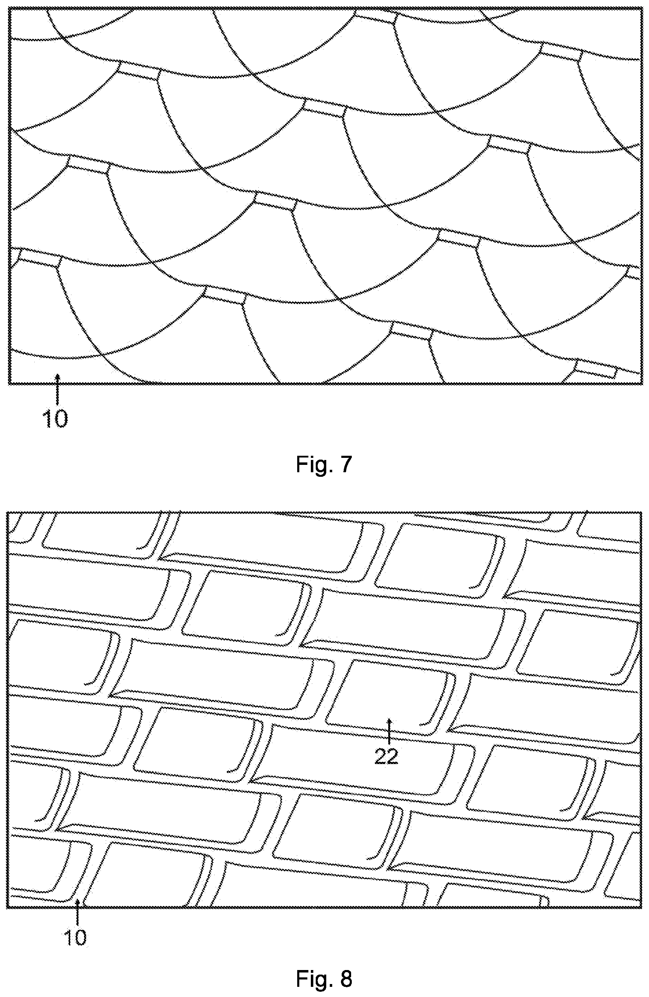

Fig. 6 zeigt schematisch einen beispielhaften Bearbeitungsbahnverlauf, wie er aus einem 3D-CAD-Modell einer vordefinierten Oberflächenstruktur erhalten werden kann und mit dem unter ortsabhängiger Anpassung der Leistung des Bearbeitungslasers 14 durch die Steuereinheit 30 in der in Fig. 1 gezeigten Vorrichtung 28 eine beispielhafte erste Oberflächenstruktur erhalten werden kann. Die mit dem Bearbeitungsbahnverlauf gemäß Fig. 6 erzeugbare Oberflächenstruktur ist schematisch in Fig. 7 dargestellt.

Fig. 8 zeigt eine weitere schematische Darstellung einer weiteren vorteilhaften Oberflächenstruktur, die auf der Oberfläche einer ersten Reifenkomponente 10 erzeugt werden kann. In der schematischen Darstellung sind die kleinen Rechtecke als Vertiefungen 22 zu verstehen, wohingegen sich die länglichen Rechtecke als Vorsprünge auf der Oberfläche ausbilden, sodass die Oberflächenstruktur eine Vielzahl von Vertiefungen 22 und eine Vielzahl von äquidistanten Vorsprüngen umfasst, die als wiederkehrende Struktureinheiten über die gesamte Oberfläche der ersten Reifenkomponente 10 angeordnet sind, sodass sich eine Oberfläche mit einer gitterförmigen Struktur ergibt.

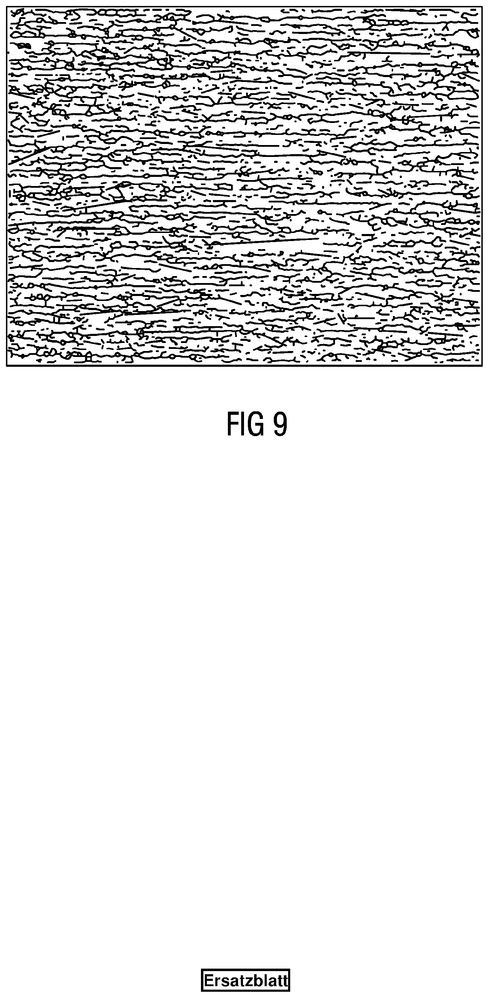

Abschließend zeigt Fig. 9 eine Mikroskopaufnahme einer beispielhaften realen Oberfläche, wie sie mit einem mechanischen Konturwerkzeug 34 erzeugt werden kann, beispielsweise unter Einsatz von Drahtbürsten auf der Oberfläche eines vulkanisierten Gummiwerkstoffs. Eine entsprechende Oberfläche gemäß Fig. 9 kann mit einer Aufnahmeeinrichtung 24, einer Einrichtung 32 gemäß der Fig. 2 ausgelesen werden, um daraus ein 3D-CAD-Model zu erzeugen, welches wiederum im erfindungsgemäßen Verfahren zur Definition einer Oberflächenstruktur eingesetzt werden kann.

### Bezugszeichenliste

- 10: erste Reifenkomponente
- 12: zweite Reifenkomponente
- 14: Bearbeitungslaser
- 16: Reinigungsvorrichtung
- 18: Aktivierungsvorrichtung
- 20: Festigkeitsträger
- 22: Vertiefung
- 24: Aufnahmeeinrichtung
- 26: Referenzkomponente
- 28: Vorrichtung
- 30: Steuereinheit
- 32: Einrichtung
- 34: mechanisches Konturwerkzeug

## Patentansprüche

1. Verfahren zur Verbindung von Reifenkomponenten für den Einsatz in der Reifenfertigung, umfassend die folgenden Verfahrensschritte:
a) Herstellen oder Bereitstellen einer ersten Reifenkomponente (10), umfassend eine unvulkanisierte oder zumindest teilweise vulkanisierte erste Kautschukmischung,
b) Herstellen oder Bereitstellen einer zweiten Reifenkomponente (12), umfassend eine unvulkanisierte oder zumindest teilweise vulkanisierte zweite Kautschukmischung,
c1) Bearbeiten zumindest einer Oberfläche der ersten Reifenkomponente (10) mit einem Bearbeitungslaser (14) in einem materialabtragenden Verfahren zum Erzeugen einer vordefinierten ersten Oberflächenstruktur auf der bearbeiteten Oberfläche der ersten Reifenkomponente (10),
c2) Reinigen der bearbeiteten Oberfläche der ersten Reifenkomponente (10) im Bereich der ersten Oberflächenstruktur mit einer Reinigungsvorrichtung (16) zum Erhalt einer gereinigten bearbeiteten Oberfläche der ersten Reifenkomponente (10), und
d) Verbinden der ersten Reifenkomponente (10) mit der zweiten Reifenkomponente (12) an der gereinigten bearbeiteten Oberfläche der ersten Reifenkomponente (10) im Bereich der ersten Oberflächenstruktur zum Erhalt eines Komponentenverbundes,
wobei die erste Reifenkomponente (10) und/oder die zweite Reifenkomponente (12) ausgewählt ist aus der Gruppe bestehend aus in einer unvulkanisierten oder zumindest teilweise vulkanisierten Kautschukmischung eingebetteten elektronischen Bauteilen, oder ausgewählt ist aus der Gruppe bestehend aus Aufnahmekörpern für elektronische Bauteile,
**dadurch gekennzeichnet, dass** das Verfahren zusätzlich den Verfahrensschritt:
c3) Bearbeiten zumindest einer Oberfläche der zweiten Reifenkomponente (12) mit einem Bearbeitungslaser (14) in einem materialabtragenden Verfahren zum Erzeugen einer vordefinierten zweiten Oberflächenstruktur auf der bearbeiteten Oberfläche der zweiten Reifenkomponente (12),
umfasst,
wobei das Verbinden der ersten Reifenkomponente (10) mit der zweiten Reifenkomponente (12) an der bearbeiteten Oberfläche der zweiten Reifenkomponente (12) im Bereich der zweiten Oberflächenstruktur erfolgt,
wobei die vordefinierte erste Oberflächenstruktur und die vordefinierte zweite Oberflächenstruktur identisch oder komplementär zueinander sind,
wobei die erste Oberflächenstruktur und/oder die zweite Oberflächenstruktur eine Vielzahl von Vertiefungen (22) umfasst, wobei die Vertiefungen (22) eine mittlere Tiefe im Bereich von 10 bis 200 µm aufweisen.

2. Verfahren nach Anspruch 1, zusätzlich umfassend den Verfahrensschritt:
c4) Reinigen der bearbeiteten Oberfläche der zweiten Reifenkomponente (12) im Bereich der zweiten Oberflächenstruktur mit einer Reinigungsvorrichtung (16) zum Erhalt einer gereinigten bearbeiteten Oberfläche der zweiten Reifenkomponente (12),
wobei das Verbinden der ersten Reifenkomponente (10) mit der zweiten Reifenkomponente (12) an der gereinigten bearbeiteten Oberfläche der zweiten Reifenkomponente (12) im Bereich der zweiten Oberflächenstruktur erfolgt.

3. Verfahren nach Anspruch 2, wobei die vordefinierte erste Oberflächenstruktur und die vordefinierte zweite Oberflächenstruktur komplementär zueinander sind.

4. Verfahren nach einem der Ansprüche 1 bis 3, zusätzlich umfassend vor Verfahrensschritt d) einen oder beide der Verfahrensschritte:
c5) Aktivieren der gereinigten bearbeiteten Oberfläche der ersten Reifenkomponente (10) mit einer Aktivierungsvorrichtung (18), und/oder
c6) Aktivieren der bearbeiteten Oberfläche oder der gereinigten bearbeiteten Oberfläche der zweiten Reifenkomponente (12) mit einer Aktivierungsvorrichtung (18).

5. Verfahren nach einem der Ansprüche 1 bis 4, wobei die erste Oberflächenstruktur und/oder die zweite Oberflächenstruktur eine Vielzahl von Vertiefungen (22), bevorzugt rillenförmige oder gitterförmige Vertiefungen (22), umfasst, wobei die Vertiefungen (22) eine mittlere Tiefe im Bereich von 30 bis 150 µm, bevorzugt im Bereich von 50 bis 100 µm, aufweisen.

6. Verfahren nach Anspruch 5, zusätzlich umfassend vor Verfahrensschritt d) den Verfahrensschritt:
c7) Anordnen von einem oder mehreren Festigkeitsträgern (20) in den Vertiefungen (22) der vordefinierten ersten Oberflächenstruktur der gereinigten bearbeiteten Oberfläche der ersten Reifenkomponente (10) und/oder der zweiten Reifenkomponente (12).

7. Verfahren nach einem der Ansprüche 1 bis 6, wobei die erste Oberflächenstruktur und/oder die zweite Oberflächenstruktur eine Vielzahl von Rillen umfasst, wobei die Rillen bevorzugt im Wesentlichen orthogonal zur vorbestimmten Hauptbelastungsrichtung des Komponentenverbundes verlaufen oder wobei die Rillen bevorzugt im Wesentlichen parallel zur vorbestimmten Hauptbelastungsrichtung des Komponentenverbundes verlaufen.

8. Verfahren nach einem der Ansprüche 1 bis 7, wobei die erste Oberflächenstruktur und/oder die zweite Oberflächenstruktur mit einem CAD-Modell vordefiniert wird, wobei das CAD-Modell für die erste Oberflächenstruktur und/oder die zweite Oberflächenstruktur mit einer Aufnahmeeinrichtung (24), bevorzugt mit einem Profilscanner, an einer Referenzoberfläche einer Referenzkomponente (26) erstellt wird, wobei die Referenzoberfläche besonders bevorzugt mit einem materialabtragenden Verfahren konturiert wurde.

9. Verfahren zum Herstellen eines Fahrzeugreifens, umfassend die Verfahrensschritte des Verfahrens nach einem der Ansprüche 1 bis 8, zusätzlich umfassend nach Verfahrensschritt d) den Verfahrensschritt:
e) Herstellen eines Fahrzeugreifenrohlings umfassend den Komponentenverbund und Vulkanisieren des Fahrzeugreifenrohlings zum Erhalt eines Fahrzeugreifens,
oder
wobei die erste Reifenkomponente (10) oder die zweite Reifenkomponente (12) ein vulkanisierter Fahrzeugreifen ist.

## Claims

1. Method for connecting tyre components for use in tyre production, comprising the following method steps:
a) producing or providing a first tyre component (10), comprising an unvulcanized or at least partially vulcanized first rubber mixture,
b) producing or providing a second tyre component (12), comprising an unvulcanized or at least partially vulcanized second rubber mixture,
c1) machining at least one surface of the first tyre component (10) with a machining laser (14) in a material-removing process to produce a predefined first surface structure on the machined surface of the first tyre component (10),
c2) cleaning the machined surface of the first tyre component (10) in the region of the first surface structure with a cleaning device (16) to obtain a cleaned machined surface of the first tyre component (10), and
d) connecting the first tyre component (10) to the second tyre component (12) at the cleaned machined surface of the first tyre component (10) in the region of the first surface structure to obtain a component assembly,
wherein the first tyre component (10) and/or the second tyre component (12) is selected from the group consisting of electronic components embedded in an unvulcanized or at least partially vulcanized rubber mixture, or is selected from the group consisting of receptacles for electronic components,
**characterized in that** the method additionally comprises the method step:
c3) machining at least one surface of the second tyre component (12) with a machining laser (14) in a material-removing process for producing a predefined second surface structure on the machined surface of the second tyre component (12),
wherein the connecting of the first tyre component (10) to the second tyre component (12) takes place at the machined surface of the second tyre component (12) in the region of the second surface structure,
wherein the predefined first surface structure and the predefined second surface structure are identical or complementary to one another,
wherein the first surface structure and/or the second surface structure comprises a multiplicity of depressions (22), wherein the depressions (22) have an average depth in the range from 10 to 200 µm.

2. Method according to Claim 1, additionally comprising the method step:
c4) cleaning the machined surface of the second tyre component (12) in the region of the second surface structure with a cleaning device (16) to obtain a cleaned machined surface of the second tyre component (12),
wherein the connecting of the first tyre component (10) to the second tyre component (12) takes place at the cleaned machined surface of the second tyre component (12) in the region of the second surface structure.

3. Method according to Claim 2, wherein the predefined first surface structure and the predefined second surface structure are complementary to one another.

4. Method according to one of Claims 1 to 3, additionally comprising before method step d) one or both of the method steps:
c5) activating the cleaned machined surface of the first tyre component (10) with an activating device (18), and/or
c6) activating the machined surface or the cleaned machined surface of the second tyre component (12) with an activating device (18).

5. Method according to one of Claims 1 to 4, wherein the first surface structure and/or the second surface structure comprises a multiplicity of depressions (22), preferably depressions (22) in the form of grooves or criss-crossing grooves, wherein the depressions (22) have an average depth in the range from 30 to 150 µm, preferably in the range from 50 to 100 µm.

6. Method according to Claim 5, additionally comprising before method step d) the method step:
c7) arranging one or more reinforcing elements (20) in the depressions (22) of the predefined first surface structure of the cleaned machined surface of the first tyre component (10) and/or the second tyre component (12).

7. Method according to one of Claims 1 to 6, wherein the first surface structure and/or the second surface structure comprises a multiplicity of grooves, wherein the grooves preferably run substantially orthogonal to the predetermined main loading direction of the component assembly or wherein the grooves preferably run substantially parallel to the predetermined main loading direction of the component assembly.

8. Method according to one of Claims 1 to 7, wherein the first surface structure and/or the second surface structure is predefined by a CAD model, wherein the CAD model for the first surface structure and/or the second surface structure is created by a recording device (24), preferably by a profile scanner, at a reference surface of a reference component (26), wherein the reference surface was particularly preferably contoured by a material-removing process.

9. Method for producing a vehicle tyre, comprising the method steps of the method according to one of Claims 1 to 8, additionally comprising after method step d) the method step:
e) producing a green vehicle tyre comprising the component assembly and vulcanizing the green vehicle tyre to obtain a vehicle tyre,
or
wherein the first tyre component (10) or the second tyre component (12) is a vulcanized vehicle tyre.

## Revendications

1. Procédé de liaison de composants de pneus pour l'utilisation dans la fabrication de pneus, comprenant les étapes de procédé suivantes :
a) la fabrication ou la fourniture d'un premier composant de pneu (10), comprenant un premier mélange de caoutchouc non vulcanisé ou au moins partiellement vulcanisé,
b) la fabrication ou la fourniture d'un deuxième composant de pneu (12), comprenant un deuxième mélange de caoutchouc non vulcanisé ou au moins partiellement vulcanisé,
c1) l'usinage d'au moins une surface du premier composant de pneu (10) avec un laser d'usinage (14) dans un procédé d'enlèvement de matière afin de créer une première structure de surface prédéfinie sur la surface usinée du premier composant de pneu (10),
c2) le nettoyage de la surface usinée du premier composant de pneu (10) dans la zone de la première structure de surface avec un dispositif de nettoyage (16) afin d'obtenir une surface usinée nettoyée du premier composant de pneu (10), et
d) la liaison du premier composant de pneu (10) avec le deuxième composant de pneu (12) au niveau de la surface usinée nettoyée du premier composant de pneu (10) dans la zone de la première structure de surface afin d'obtenir un assemblage de composants,
le premier composant de pneu (10) et/ou le deuxième composant de pneu (12) étant choisi parmi le groupe constitué de composants électroniques intégrés dans un mélange de caoutchouc non vulcanisé ou au moins partiellement vulcanisé, ou étant choisi parmi le groupe constitué de corps de réception pour composants électroniques,
**caractérisé en ce que** le procédé comprend en outre l'étape de procédé suivante :
c3) l'usinage d'au moins une surface du deuxième composant de pneu (12) avec un laser d'usinage (14) dans un procédé d'enlèvement de matière afin de créer une deuxième structure de surface prédéfinie sur la surface usinée du deuxième composant de pneu (12),
la liaison du premier composant de pneu (10) avec le deuxième composant de pneu (12) s'effectuant au niveau de la surface usinée du deuxième composant de pneu (12) dans la zone de la deuxième structure de surface,
la première structure de surface prédéfinie et la deuxième structure de surface prédéfinie étant identiques ou complémentaires l'une par rapport à l'autre,
la première structure de surface et/ou la deuxième structure de surface comprenant une pluralité de renfoncements (22), les renfoncements (22) ayant une profondeur moyenne dans la plage de 10 à 200 µm.

2. Procédé selon la revendication 1, comprenant en outre l'étape de procédé suivante :
c4) le nettoyage de la surface usinée du deuxième composant de pneu (12) dans la zone de la deuxième structure de surface avec un dispositif de nettoyage (16) afin d'obtenir une surface usinée nettoyée du deuxième composant de pneu (12),
la liaison du premier composant de pneu (10) avec le deuxième composant de pneu (12) s'effectuant au niveau de la surface usinée nettoyée du deuxième composant de pneu (12) dans la zone de la deuxième structure de surface.

3. Procédé selon la revendication 2, dans lequel la première structure de surface prédéfinie et la deuxième structure de surface prédéfinie sont complémentaires l'une de l'autre.

4. Procédé selon l'une quelconque des revendications 1 à 3, comprenant en outre, avant l'étape de procédé d), l'une ou les deux étapes de procédé suivantes :
c5) l'activation de la surface usinée nettoyée du premier composant de pneu (10) avec un dispositif d'activation (18), et/ou
c6) l'activation de la surface usinée ou de la surface usinée nettoyée du deuxième composant de pneu (12) avec un dispositif d'activation (18).

5. Procédé selon l'une quelconque des revendications 1 à 4, dans lequel la première structure de surface et/ou la deuxième structure de surface comprend une pluralité de renfoncements (22), de préférence de renfoncements en forme de rainures ou de grilles (22), les renfoncements (22) présentant une profondeur moyenne dans la plage de 30 à 150 µm, de préférence dans la plage de 50 à 100 µm.

6. Procédé selon la revendication 5, comprenant en outre l'étape de procédé suivante avant l'étape de procédé d) :
c7) l'agencement d'un ou plusieurs supports de résistance (20) dans les renfoncements (22) de la première structure de surface prédéfinie de la surface usinée nettoyée du premier composant de pneu (10) et/ou du deuxième composant de pneu (12).

7. Procédé selon l'une quelconque des revendications 1 à 6, dans lequel la première structure de surface et/ou la deuxième structure de surface comprend une pluralité de rainures, les rainures s'étendant de préférence essentiellement orthogonalement à la direction de contrainte principale prédéterminée de l'assemblages de composants ou les rainures s'étendant de préférence essentiellement parallèlement à la direction de contrainte principale prédéterminée de l'assemblage de composants.

8. Procédé selon l'une quelconque des revendications 1 à 7, dans lequel la première structure de surface et/ou la deuxième structure de surface est prédéfinie à l'aide d'un modèle CAO, le modèle CAO pour la première structure de surface et/ou la deuxième structure de surface étant créé avec un dispositif de prise de vue (24), de préférence avec un scanner de profil, sur une surface de référence d'un composant de référence (26), la surface de référence ayant été de manière particulièrement préférée profilée avec un procédé d'enlèvement de matière.

9. Procédé de fabrication d'un pneu de véhicule, comprenant les étapes de procédé du procédé selon l'une quelconque des revendications 1 à 8, comprenant en outre, après l'étape de procédé d), l'étape suivante :
e) la fabrication d'une ébauche de pneu de véhicule comprenant l'assemblage de composants et la vulcanisation de l'ébauche de pneu de véhicule pour obtenir un pneu de véhicule,
ou
le premier composant de pneu (10) ou le deuxième composant de pneu (12) étant un pneu vulcanisé de véhicule.
